# EUROPEAN PATENT APPLICATION

(11) **EP 4 701 242 A1**
(43) Date of publication of application: **25.02.2026**
(21) Application number: 23933509.4
(22) Date of filing: 21.04.2023
(51) Int. Cl.: H04W 4/50

(54) **SENSING METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: YU, Xinlei, Dongguan, Guangdong 523860 (CN); LIU, Yang, Dongguan, Guangdong 523860 (CN)
(74) Representative: Mewburn Ellis LLP
(86) International application number: PCT/CN2023/089860
(87) International publication number: WO 2024/216633

(57) **Abstract**

The disclosure relates to a sensing method and a communication device. The method includes: a first communication device sends first information to a second communication device, where the first information is used for requesting the second communication device to provide information of a first sensing service and/or to update information of a second sensing service, where the first sensing service is a subsequent sensing service of the second sensing service of the first communication device. The embodiment of the disclosure can flexibly adjust the sensing service, which is conducive to efficient utilization of transmission resources and energy conservation.

## Description

### TECHNICAL FIELD

The application relates to the field of communication, and more particularly, to a sensing method and a communication device.

### BACKGROUND

Cellular networks, including the 5th-Generation (5G) networks, are primarily used for communication. However, the wireless electromagnetic wave signals used in cellular networks can not only be used for wireless data transmission and communication, but also be capable of environmental sensing, such as recognition of user actions or gestures, respiratory monitoring, terminal mobile speed estimation, environmental imaging, weather monitoring, etc. Therefore, cellular networks are not only for communication and data transmission, but can also for sensing information acquisition. In some sensing services, in order to achieve the requirements of sensing accuracy and precision, more resources are occupied, which is not conducive to efficient utilization of resources and energy conservation.

### SUMMARY

Embodiments of the disclosure provide a sensing method and a communication device.

Embodiments of the disclosure provide a sensing method, including: a first communication device sends first information to a second communication device, where the first information is used for requesting the second communication device to provide information of a first sensing service and/or to update information of a second sensing service, where the first sensing service is a subsequent sensing service of the second sensing service of the first communication device.

Embodiments of the disclosure provide a sensing method, including: a first communication device activates a first sensing service when a trigger condition for the first sensing service is met.

Embodiments of the disclosure provide a sensing method, including: a second communication device receives first information sent by a first communication device, where the first information is used for requesting the second communication device to provide information of a first sensing service and/or to update information of a second sensing service, where the first sensing service is a subsequent sensing service of the second sensing service of the first communication device.

Embodiments of the disclosure provide a sensing method, including: a second communication device sends a trigger condition for a first sensing service to a first communication device, where the trigger condition is used for indicating to the first communication device to activate the first sensing service when the trigger condition for the first sensing service is met.

Embodiments of the disclosure provide a first communication device, including: a sending unit, configured to send first information to a second communication device, where the first information is used for requesting the second communication device to provide information of a first sensing service and/or to update information of a second sensing service; the first sensing service is a subsequent sensing service of the second sensing service of the first communication device.

Embodiments of the disclosure provide a first communication device, including: a processing unit, configured to activate a first sensing service by the first communication device when a trigger condition for the first sensing service is met.

Embodiments of the disclosure provide a second communication device, including: a receiving unit, configured to receive first information from a first communication device, where the first information is used for requesting the second communication device to provide information of a first sensing service and/or to update information of a second sensing service, where the first sensing service is a subsequent sensing service of the second sensing service of the first communication device.

Embodiments of the disclosure provide a second communication device, including: a sending unit, configured to send a trigger condition for a first sensing service by the second communication device to a first communication device, where the trigger condition is used for indicating to the first communication device to activate the first sensing service when the trigger condition for the first sensing service is met.

Embodiments of the disclosure provide a first communication device, including: a processor and a memory, where the memory is configured to store a computer program, the processor is configured to invoke and execute the computer program stored in the memory, to cause the first communication device to perform the aforementioned sensing method.

Embodiments of the disclosure provide a second communication device, including: a processor and a memory, where the memory is configured to store a computer program, the processor is configured to invoke and execute the computer program stored in the memory, to cause the second communication device to perform the aforementioned sensing method.

Embodiments of the disclosure provide a chip to perform the aforementioned sensing method.

Specifically, the chip includes: a processor configured to invoke and execute a computer program from a memory, to cause a device equipped with the chip to perform the aforementioned sensing method.

Embodiments of the disclosure provide a computer-readable storage medium, configured to store computer programs which, when executed by a device, are operable with the device to perform the aforementioned sensing method.

Embodiments of the disclosure provide a computer program product, including computer program instructions, which are operable with a computer to perform the aforementioned sensing method.

Embodiments of the disclosure provide a computer program which, when executed on a computer, is operable with the computer to perform the aforementioned sensing method.

Embodiments of the disclosure can flexibly adjust the sensing service, which is conducive to efficient utilization of transmission resources and energy conservation.

### BRIEF DESCRIPTIONS OF THE DRAWINGS

FIG. 1 is a schematic diagram of an application scenario according to embodiments of the disclosure.
FIG. 2 is a systemic architecture diagram of a 5G network according to embodiments of the disclosure.
FIG. 3a to FIG. 3f are schematic diagrams of a wireless sensing mode according to embodiments of the disclosure.
FIG. 4 is a flowchart of sensing function (SF) controlled user-equipment to user-equipment (UE-UE) sensing according to embodiments of the disclosure.
FIG. 5 is a flowchart of UE-autonomous UE-UE sensing according to embodiments of the disclosure.
FIG. 6a to FIG. 6d are schematic diagrams of sensory scenarios according to embodiments of the disclosure.
FIG. 7a is a schematic diagram of a mono-node sensing mode according to embodiments of the disclosure.
FIG. 7b is a schematic diagram of a sensing information fusion in a multi-node cooperative sensing mode according to embodiments of the disclosure.
FIG. 7c is a schematic diagram of a sensing node selection in a multi-node cooperative sensing mode according to embodiments of the disclosure.
FIG. 8 is a schematic flowchart of a sensing method according to an embodiment of the disclosure.
FIG. 9 is a schematic flowchart of a sensing method according to another embodiment of the disclosure.
FIG. 10 is a schematic flowchart of a sensing method according to another embodiment of the disclosure.
FIG. 11 is a schematic flowchart of a sensing method according to another embodiment of the disclosure.
FIG. 12 is a schematic flowchart of a sensing method according to another embodiment of the disclosure.
FIG. 13 is a schematic flowchart of a sensing method according to another embodiment of the disclosure.
FIG. 14 is a schematic flowchart of a sensing method according to another embodiment of the disclosure.
FIG. 15 is a schematic flowchart of a sensing method according to another embodiment of the disclosure.
FIG. 16 is a schematic flowchart of a sensing method according to another embodiment of the disclosure.
FIG. 17 is a schematic flowchart of a sensing method according to another embodiment of the disclosure.
FIG. 18 is a schematic flowchart of Example 1 of the sensing method according to embodiments of the disclosure.
FIG. 19 is a schematic flowchart of Example 2 of the sensing method according to embodiments of the disclosure.
FIG. 20 is a schematic flowchart of Example 3 of the sensing method according to embodiments of the disclosure.
FIG. 21 is a schematic block diagram of a first communication device according to an embodiment of the disclosure.
FIG. 22 is a schematic block diagram of a first communication device according to another embodiment of the disclosure.
FIG. 23 is a schematic block diagram of a first communication device according to another embodiment of the disclosure.
FIG. 24 is a schematic block diagram of a first communication device according to another embodiment of the disclosure.
FIG. 25 is a schematic block diagram of a second communication device according to an embodiment of the disclosure.
FIG. 26 is a schematic block diagram of a second communication device according to another embodiment of the disclosure.
FIG. 27 is a schematic block diagram of a second communication device according to another embodiment of the disclosure.
FIG. 28 is a schematic block diagram of a second communication device according to another embodiment of the disclosure.
FIG. 29 is a schematic block diagram of a communication device according to embodiments of the disclosure.
FIG. 30 is a schematic block diagram of a chip according to embodiments of the disclosure.
FIG. 31 is a schematic block diagram of a communication system according to embodiments of the disclosure.

### DETAILED DESCRIPTION

The following will describe technical solutions of embodiments of the disclosure with reference to the accompanying drawings in the embodiments of the disclosure.

The technical solutions of embodiments of the disclosure are applicable to various communication systems, for example, a global system for mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolved NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), wireless fidelity (WiFi), a fifth-generation (5G) communication system, or other communication systems.

Generally, a traditional communication system supports a limited quantity of connections and therefore is easy to implement. However, with the development of communication technology, a mobile communication system will not only support traditional communication but also support, for example, device-to-device (D2D) communication, machine-to-machine (M2M) communication, machine-type communication (MTC), vehicle-to-vehicle (V2V) communication, or vehicle-to-everything (V2X) communication, etc. Embodiments of the disclosure can also be applied to these communication systems.

In an implementation, the communication system in embodiments of the disclosure can be applied to a carrier aggregation (CA) scenario, a dual connectivity (DC) scenario, or a standalone (SA) network deployment scenario.

In another implementation, the communication system in embodiments of the disclosure is applicable to an unlicensed spectrum, where the unlicensed spectrum can also be regarded as a shared spectrum. Or the communication system in the embodiments of the disclosure is applicable to a licensed spectrum, where the licensed spectrum can be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

The terminal device can be a station (ST) in a WLAN, a cellular telephone, a cordless telephone, a session initiation protocol (SIP) telephone, a wireless local loop (WLL) station, a personal digital assistant (PDA) equipment, a handheld device or a computing device with wireless communication functions, other processing devices coupled with a wireless modem, an in-vehicle device, a wearable device, and a terminal device in a next-generation communication system, for example, a terminal device in an NR network, a terminal device in a future evolved public land mobile network (PLMN).

In embodiments of the disclosure, the terminal device can be deployed on land, which includes indoor or outdoor, handheld, wearable, or in-vehicle; the terminal device can also be deployed on water (such as ships, etc.); the terminal device can also be deployed in the air (such as airplanes, balloons, satellites, etc.).

In embodiments of the disclosure, the terminal device can be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc.

By way of explanation rather than limitation, in embodiments of the disclosure, the terminal device can also be a wearable device. The wearable device can also be called a wearable smart device, which is a generic term of wearable devices obtained through intellectualized design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes: device with complete functions and large sizes and is capable of realizing all or part of functions independently without a smart phone, such as a smart watch or smart glasses, etc.; and, device that is dedicated to a specific type of application function and required to be used together with other devices such as a smart phone, such as various types of smart bands and smart jewelries for physical monitoring, etc.

In embodiments of the disclosure, the network device can be a device configured to communicate with a mobile device, and the network device can be an access point (AP) in a WLAN, a base transceiver station (BTS) in GSM or CDMA, or may be a Node B (NB) in WCDMA, or may be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc.

By way of explanation rather than limitation, in embodiments of the disclosure, the network device can be mobile. For example, the network device can be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device can also be a base station deployed on land or water.

In embodiments of the disclosure, the network device serves a cell, and the terminal device communicates with the network device via a transmission resource (for example, a frequency-domain resource or a spectrum resource) used by the cell. The cell may be a cell corresponding to the network device (for example, a base station). The cell may belong to a macro base station, or can belong to a base station corresponding to a small cell. The small cell may include: a metro cell, a micro cell, a pico cell, a femto cell, etc. These small cells are characterized by small coverage and low transmitting power and are adapted to provide data transmission service with high-rate.

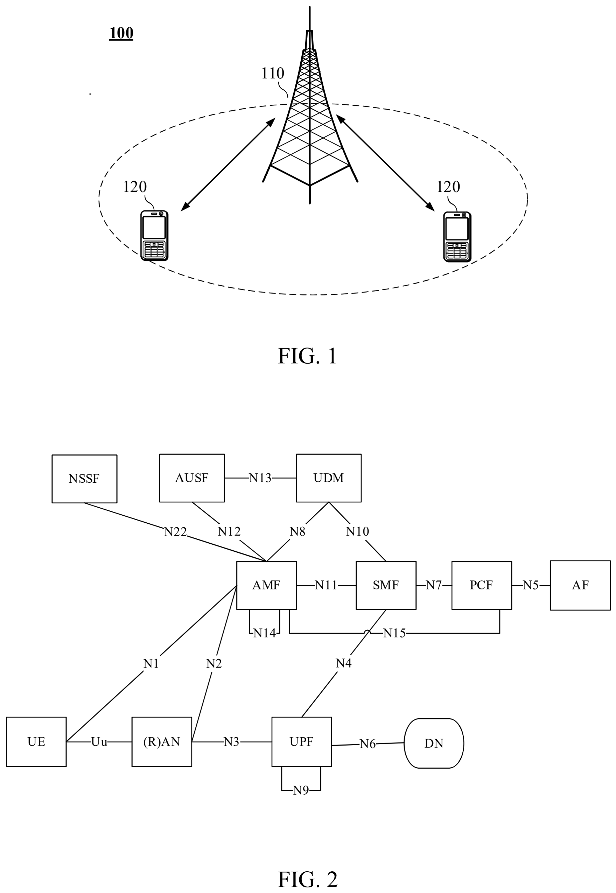

FIG. 1 exemplarily illustrates a communication system 100. The communication system includes one network device 110 and two terminal devices 120. In an implementation, the communication system 100 can include multiple network devices 110, and there can be other numbers of terminal devices 120 within the coverage range of each network device 110, which is not limited in embodiments of the disclosure.

In an implementation, the communication system 100 can further include other network entities such as a mobility management entity (MME) or an access and mobility management function (AMF), which is not limited in embodiments of the disclosure.

The network device can further include an access network device and a core network device. That is, the wireless communication system can further include multiple core networks for communicating with the access network device. The access network device can be an evolved Node B (eNB or e-NodeB), a macro base station, a micro base station (also referred to as a "small base station"), a pico base station, an access point (AP), a transmission point (TP), or a new generation Node B (gNodeB) in an LTE system, a next generation NR system, or an authorized auxiliary access long-term evolution (LAA-LTE) system.

It should be understood that a device with communication functions in the network/system in embodiments of the disclosure may be referred to as a communication device. Taking the communication system illustrated in FIG. 1 as an example, the communication devices can include a network device and a terminal device with communication functions. The network device and terminal device can be specific devices in the embodiments of the disclosure, and details are not repeated here. The communication devices can also include other devices in the communication system, such as a network controller, an MME or other network entities, which are not limited in the embodiments of the disclosure.

It should be understood that the terms "system" and "network" herein are usually used interchangeably throughout this disclosure. The term "and/or" herein only describes an association relationship between associated objects, which means that there can be three relationships. For example, *A* and/or *B* can mean *A* alone, both *A* and *B* exist, or *B* alone. In addition, the character "/" herein generally indicates that the associated objects are in an "or" relationship.

It should be understood that the term "indication" referred to in the embodiments of the disclosure can be a direct indication, an indirect indication, or that there is an association relationship. For example, *A* indicates *B* may mean that *A* directly indicates *B* (e.g., *B* can be obtained according to *A),* may mean that *A* indirectly indicates *B* (e.g., *A* indicates C, and *B* can be obtained according to C), or may mean that there is an association relationship between A and*B*.

In the elaboration of embodiments of the disclosure, the term "corresponding" may mean that there is a direct or indirect correspondence between the two, may mean that there is an association between the two, or may mean a relationship of indicating and being indicated or configuring and being configured, etc.

In order to facilitate understanding of technical solutions of the embodiments of the disclosure, the related art of the embodiments of the disclosure will be described below. The following related art, as optional solutions, can be combined with the technical solutions of the embodiments of the disclosure, and all be covered within the protection scope of embodiments of the disclosure.

FIG. 2 illustrates a systemic architecture of a 5G network. A UE establishes an access stratum (AS) connection with an access network (AN) over a Uu interface to exchange access stratum messages and perform wireless data transmission. The UE establishes a non-access stratum (NAS) connection with the AMF over an N1 interface to exchange NAS messages. In the core network, the AMF is for mobility management, and a session management function (SMF) is for session management. In addition to mobility management for the UE, the AMF is also responsible for forwarding session management-related messages between the UE and the SMF. In the core network, a policy control function (PCF) is for policy management, and is responsible for formulating policies related to mobility management, session management, and charging for UEs. In the core network, a user plane function (UPF) performs data transmission with an external data network over an N6 interface, and performs data transmission with the AN over an N3 interface.

Chart. 1 illustrates some sensing information in different types, for example:

| | sensing information in different types | contents of sensing information |
|---|---|---|
| 1 | received signals or original channel information | complex results of received signals or channel responses, amplitude/phase, I/Q channels and their operation results |
| 2 | basic measurement quantity | time delay, Doppler frequency shift, angle, signal strength, and multidimensional combination representations thereof |
| 3 | basic attributes or status of sensing object | distance, speed, orientation, accelerated velocity, etc. |
| 4 | advance attributes or status of sensing object | object existence, spatial location, trajectory, action, expression, vital signs, quantity, imaging result, weather, air quality, shape, material, element, etc. |

In the 5G network, sensing capability can be supported, and in the 3rd generation partnership project (3GPP) network, sensing capability can be supported by introducing sensing function (SF) and corresponding processes. When an application sends a sensing request for a sensing object to the core network of the 3GPP network, the core network selects a correct access network device or an auxiliary UE (collectively referred to as a sensing node) via the SF or the AMF to trigger the capability of sensing-related wireless measurement, activates a sensing information measurement and generates a sensing result.

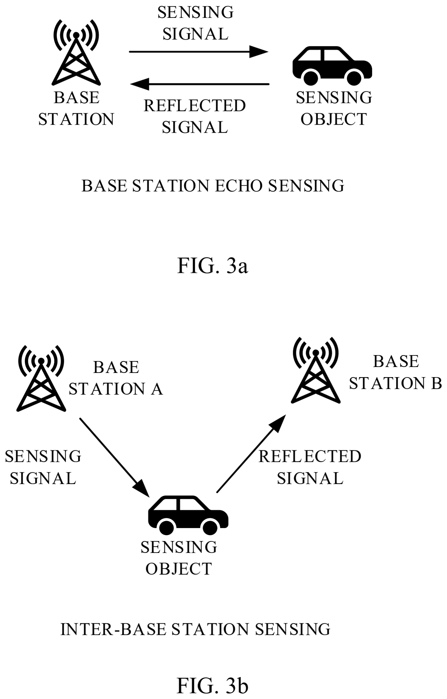

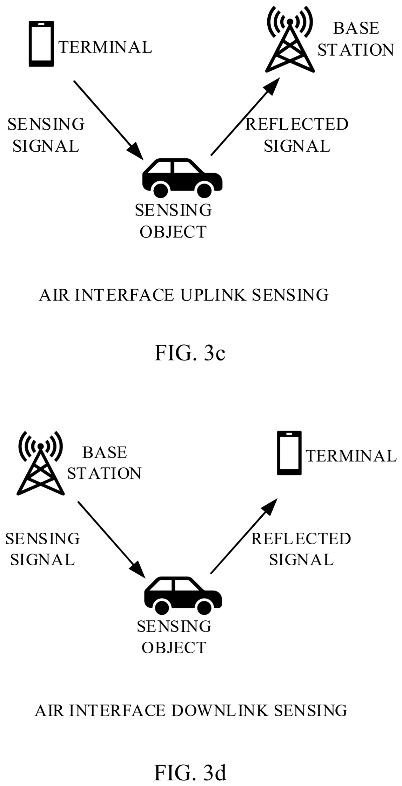

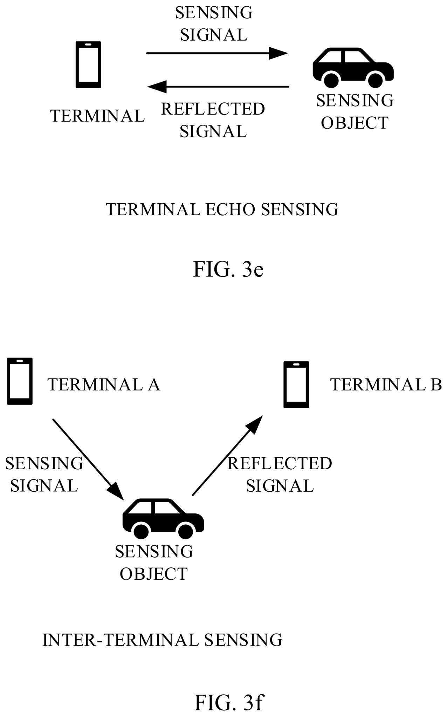

Examples of the major wireless sensing modes of an integrated sensing and communication (ISAC) are as follows.
1) gNB monostatic sensing: as illustrated in FIG. 3a, a base station sends a sensing signal and receives an echo signal.
2) gNB-gNB bistatic sensing: as illustrated in FIG. 3b, base station B receives a sensing signal sent by base station A.
3) UE-gNB uplink bistatic sensing: as illustrated in FIG. 3c, a base station receives a sensing signal sent by a terminal.
4) UE-gNB downlink bistatic sensing: as illustrated in FIG. 3d, a terminal receives a sensing signal sent by a base station.
5) UE monostatic sensing: as illustrated in FIG. 3e, a terminal sends a sensing signal and receives an echo signal.
6) UE-UE bistatic sensing: as illustrated in FIG. 3f, terminal B receives a sensing signal sent by terminal A.

In the initial stage of the 5G integrated sensing and communication, it is feasible to reuse existing air interface signals for sensing as far as possible without introducing overmuch air interface enhancements; furthermore, in view of the complexity of full-duplex implementation, sensing between the terminal and/or the base station is prioritized.

Several flowcharts will be given below by taking the UE-UE sensing as an example. The flowchart of the UE- gNB sensing can be an analogy.

### UE-UE Sensing Flows

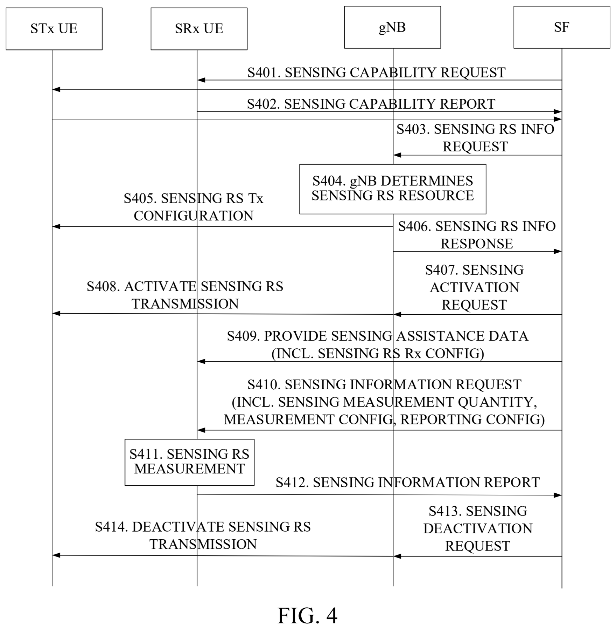

FIG. 4 is a flowchart of a SF-controlled UE-UE sensing. The flow may include the following.

S401, a SF sends a sensing capability request to a sensing transmitting (STx) UE and a sensing receiving (SRx) UE respectively.

S402, the STx UE and the SRx UE respectively sends a sensing capability report to the SF.

S403, the SF sends a sensing reference signal (RS) information (Info) request to a base station (gNB).

S404, the gNB determines a sensing RS resource.

S405, the gNB sends a sensing RS transmitting (Tx) configuration to the STx UE.

S406, the gNB sends a sensing RS Info response to the SF.

S407, the SF sends a sensing activation request to the gNB.

S408, the gNB indicates to the STx UE to activate sensing RS transmission.

S409, the SF indicates to the SRx UE to provide sensing assistance data (including sensing RS receiving (Rx) configuration).

S410, the SF sends a sensing information request (including a sensing measurement quantity, measurement configuration, and reporting configuration) to the SRx UE.

S411, the SRx UE performs a sensing RS measurement.

S412, the SRx UE sends a sensing information report to the SF.

S413, the SF sends a sensing deactivation request to the gNB.

S414, the gNB indicates to the STx UE to deactivate sensing RS transmission.

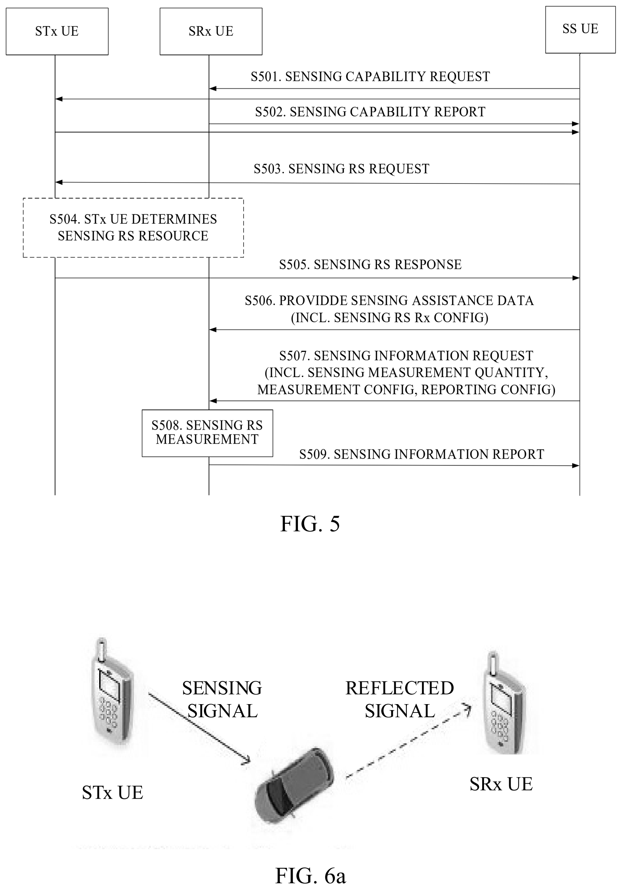

FIG. 5 is a flowchart of a UE-autonomous UE-UE sensing, mainly for out-of-coverage (OOC) scenarios. With regard to the OOC scenario, the SF cannot participate in a terminal locating process since the lack of network coverage, and therefore a sensing server UE (SS UE) needs to be selected to take on certain SF responsibilities in the OOC scenario. The flow may include the following.

S501, the SS UE sends a sensing capability request to the STx UE and the SRx UE respectively.

S502, the STx UE and the SRx UE respectively sends a sensing capability report to the SS UE.

S503, the SS UE sends a sensing RS request to the STx UE.

S504, the STx UE determines a sensing RS resource.

S505, the STx UE sends a sensing RS response to the SS UE.

S506, the SS UE indicates to the SRx UE to provide sensing assistance data (including sensing RS Rx configuration).

S507, the SS UE sends a sensing information request (including a sensing measurement quantity, measurement configuration, and reporting configuration) to the SRx UE.

S508, the SRx UE performs a sensing RS measurement.

S509, the SRx UE sends a sensing information report to the SS UE.

UE sensing may involve the following different terminal roles.

A STx terminal: which is responsible for sensing RS transmission during the UE sensing.

A SRx terminal: which is responsible for sensing RS reception and measurement to obtain a sensing measurement quantity during the UE sensing.

An SS UE/a sensing management terminal: which is a logic node taking on certain SF functions, such as processing the sensing measurement quantity, during the UE sensing in the OOC scenario; and can either be a STx terminal or a SRx terminal.

In particular, for UE monostatic sensing, the STx terminal and the SRx terminal may be the same terminal.

### Per-Area & Per-Object Sensing

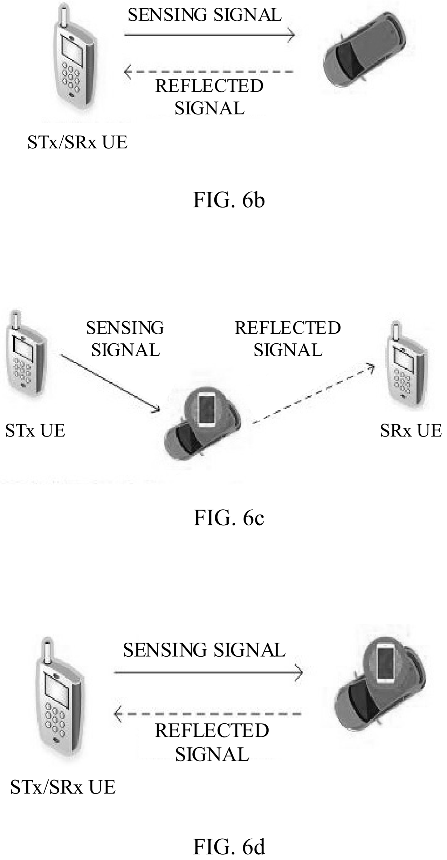

5G-Advanced (5G-A) ISAC scenarios can be categorized into per-area sensing scenario and per-object sensing scenario depending on whether the sensing requirement focuses primarily on a designated sensing area or a designated sensing object; or can be categorized into device-based sensing scenario and device-free sensing scenario depending on whether the sensing object has signal transmission and reception capabilities. As illustrated in FIG. 6a and FIG. 6b, in device-free sensing scenario, sensing may be the per-area sensing or the per-object sensing (without 3GPP nodes). FIG. 6a illustrates an inter-UE sensing in a device-free sensing scenario, while FIG. 6b illustrates a terminal echo sensing in a device-free sensing scenario. As illustrated in FIG. 6c and FIG. 6d, in device-based sensing scenario, sensing may be a per-UE sensing. In this scenario, object with a UE but still using the reflected signal or sensing. FIG. 6c illustrates an inter-UE sensing in a device-based sensing scenario, and FIG. 6d illustrates a terminal echo sensing in a device-based sensing scenario.

For example, in scenarios of flight path management, beam management of base station and terminal, the sensing objects such as unmanned aerial vehicles (UAVs) and terminals are UEs with signal transmission or reception capabilities, therefore such scenarios belong to device-based sensing scenarios. In scenarios of weather monitoring and respiratory monitoring, the sensing objects such as rainfall and human are objects without signal transmission or reception capabilities, therefor such scenarios belong to device-free sensing scenarios.

### 1) Per-Area Sensing Scenario

Sensing requirements are universally present across various industries. Scenarios that require efficient sensing of the real-time status of roads, vehicles, and people, in factories, on roads, in low-altitude areas, in cities, and even larger spatial and temporal ranges, can be referred to as per-area sensing scenarios.

In smart transportation scenarios, based on different sensing modes, road environment sensing and high-precision maps construction can be performed effectively, thereby providing beyond-visual-range assistance for the safe operation of autonomous vehicles. Based on different sensing modes, comprehensive, all-weather, and uninterrupted detection of the moving trajectories and speeds of vehicles can be performed and sensing information can be uploaded to a processing center, thereby comprehensively enhancing the intelligent sensing capability in highway operating conditions and providing data support for road supervision. Based on different sensing modes, the railway track environment sensing and all-weather detection of foreign object intrusion for high-speed rail surroundings can be performed.

In smart low-altitude scenarios, based on different sensing modes, comprehensive and multi-dimensional sensing of the airspace can be performed to provide sensing result to the UAVs, thereby offering redundancy for obstacle avoidance warnings and improving the success rate of UAV obstacle avoidance. Based on different sensing modes, full airspace sensing can be performed to locate and track UAVs that intrude into the regulatory area, thereby achieving UAV intrusion monitoring for fixed areas.

In smart living scenarios, based on different sensing modes, respiratory monitoring, fitness monitoring, gesture and/or posture recognition, etc., are performed by sensing wireless channel variation. Based on different sensing modes, signal link attenuation in a communication link can be measured, thereby corresponding weather indicator for weather monitoring can be obtained through analysis based on the relationship between the signal link attenuation and weather indicator.

In smart network scenarios, based on different sensing modes, information such as density and location of idle terminals within a cell can be obtained to assist in energy conservation for the base station and optimization of base station resource scheduling in the cell.

### 2) Per-Object Sensing Scenario

The scenario of performing constant sensing and tracking on the sensing object by using ISAC technology, to obtain dynamic monitoring of the status of the sensing object, can be referred to as a per-object sensing scenario.

In smart transportation scenarios, based on different sensing modes, continuous tracking of vehicles is performed and real-time dynamic monitoring of vehicle status can be achieved. For vehicles with wireless communication capability, the accuracy of vehicle sensing can be improved with the assistance from vehicle-mounted terminals.

In smart low-altitude scenarios, based on different sensing modes, the UAVs that intrude into the regulatory area can be located and tracked, then take countermeasures against rogue UAV operations. For networked UAVs with wireless communication capability, auxiliary flight services can be provided by identifying the flight status of the UAVs and obstacles in the flight route with the assistance from UAV terminals.

In smart living scenarios, based on different sensing modes, respiratory monitoring, fitness monitoring, gesture and/or posture recognition, etc., on specific individual can be performed by terminals with communication capability, thereby realizing precise real-time dynamic monitoring.

In smart network scenarios, with the assistance of ISAC technology, beam management and channel estimation accuracy, terminal beam tracking timeless, and channel estimation accuracy can be enhanced, and feedback expenditure can be reduced.

### Cooperative Sensing

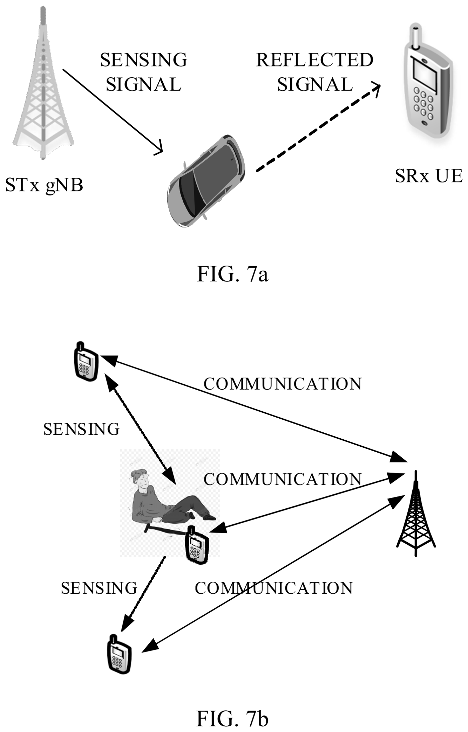

Multi-node cooperative sensing mainly studies how multiple sensing nodes cooperate to improve the sensing performance. The "multi-node" herein refers to the existence of multiple sensing links, which means that there are at least multiple sensing signal transmitting nodes or multiple sensing signal receiving nodes. A mode of mono-sensing link that consists of one sensing signal Tx node and one sensing signal Rx node is not within the research scope of the multi-node cooperative sensing. For example, as illustrated in FIG. 7a, although there are two sensing signal nodes, only one sensing link is formed. As illustrated in FIG. 7b, two sensing links are formed, thereby being multi-node sensing.

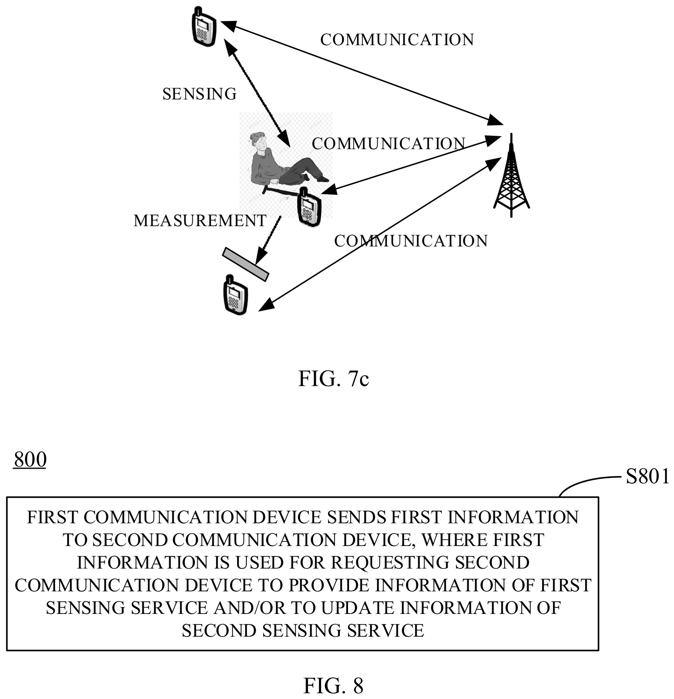

Multi-node cooperation requires a control node to coordinate sensing resource configuration between multiple nodes and to process the sensing result. The control node is a functional unit, and there are no constraints on the specific physical carrier. Multiple nodes may all participate in the entire sensing, which means that each node may report sensing result, and to improve sensing performance by sensing result fusion. For example, the multi-node cooperative sensing illustrated in FIG. 7b illustrates a scenario of sensing information fusion. Or, multiple nodes may partially participate in the entire sensing, which means that some sensing nodes may first perform measurements and reporting, and the control node may decide which nodes will continue with the subsequent sensing. This approach improves the reliability of sensing result through reasonable sensing node selection. The multi-node cooperative sensing illustrated in FIG. 7c may exemplarily explain the sensing node selection scenario.

In relevant locating process, even periodical locating is conducted independently each time. With regard to sensing, meeting the required sensing accuracy and improving sensing precision in some sensing services may need a large time-frequency resource to send a sensing reference signal (sensing RS), or may need to configure multiple sensing nodes for cooperative sensing. Therefore, each sensing service execution may occupy significant resources, which is not conducive to efficient resource utilization and energy conservation.

For example, in the context of gesture recognition, the network may configure the sensing node to send and measure the sensing RS periodically. However, in most cases (such as when no human presents in the room), it is unnecessary to occupy significant time-frequency resources to send the sensing RS.

FIG. 8 is a schematic flowchart of a sensing method according to an embodiment of the disclosure. A method 800 may be optionally applied in, but not limited to, any of the scenarios illustrated in FIG. 1 to FIG. 7c. The method includes at least some of the following.

S810, a first communication device sends first information to a second communication device, where the first information is used for requesting the second communication device to provide information of a first sensing service and/or to update information of a second sensing service.

In an implementation, the first sensing service is a subsequent sensing service of the second sensing service of the first communication device.

In embodiments of the disclosure, the first communication device can be a sensing receiver. The sensing receiver can be further referred to as SRx node, SRx terminal, or SRx UE, etc. The second communication device can be a network device, a sensing transmitter or an SS UE, or a network element with SF. The sensing transmitter can be referred to as STx node, STx terminal, or STx UE, etc. In UE sensing, the STx terminal may send a sensing signal (such as a sensing RS), and the SRx terminal may receive the sensing signal and obtain a sensing measurement quantity.

In embodiments of the disclosure, the first sensing service and the second sensing service may be UE-based sensing services. In the UE-based sensing, a terminal may be operable as the SRx node to measure the sensing signal and calculate to obtain a sensing result. The first communication device may first execute the second sensing service to obtain a preliminary sensing result, and may send the first information to the second communication device based on the preliminary sensing result, so as to request the second communication device to configure a further sensing service, i. e., the first sensing service. In this regard, the sensing service can be flexibly adjusted, thereby being conducive to efficient utilization of transmission resources and energy conservation. For example, the second sensing service may be a non-cooperative sensing, a coarse sensing or a per-area sensing, and the first sensing service may be a cooperative sensing based on the second sensing service, a fine sensing or a per-object sensing.

In some examples, the first communication device may send the first information to the second communication device based on a sensing result of non-cooperative sensing, to request the cooperative sensing for supporting mobility and improving sensing accuracy.

In some examples, the first communication device may send the first information to the second communication device based on a sensing result of coarse sensing, to request fine sensing for energy conservation.

In some examples, the first communication device may send the first information to the second communication device based on a sensing result of per-area sensing of a large base station, to request for triggering the per-object sensing of a small base station. For example, the large base station may be a macro base station and is mainly used for per-area sensing; and the small base station may be a micro base station and is mainly used for per-object sensing.

In embodiments of the disclosure, the terminal triggers further cooperative sensing, fine sensing, or per-object sensing of the small base station based on non-cooperative sensing, coarse sensing, or per-area sensing of the large base station, which is conducive to efficient utilization of air interface transmission resources and energy conservation for the terminal.

In embodiments of the disclosure, the first communication device may first execute the second sensing service to obtain the preliminary sensing result, and may send the first information to the second communication device based on the preliminary sensing result, to request the second communication device to update the second sensing service. After updating the information of the second sensing service, such as the sensing signal, the second communication device may feedback the configuration of an updated sensing signal to the first communication device. The first communication device can measure an updated sensing signal of the second sensing service based on feedback from the second communication device, and calculate to obtain the corresponding sensing information, and then report it to the second communication device. In this regard, the update of the second sensing service can be controlled through the first information, thereby the first communication device can be controlled to measure the updated sensing signal, which is conducive to efficient utilization of transmission resources and energy conservation for the first communication device.

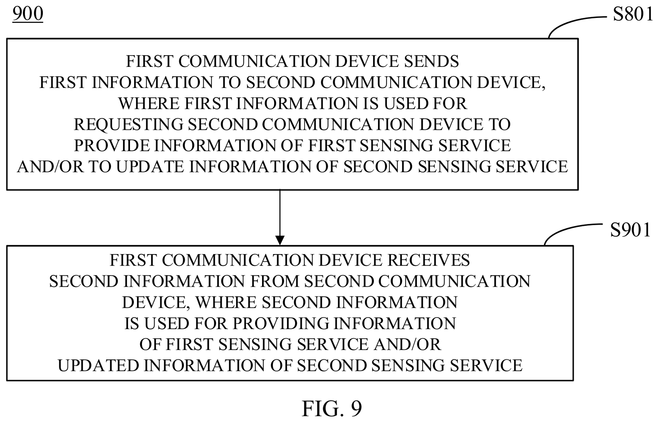

FIG. 9 is a schematic flowchart of a sensing method according to another embodiment of the disclosure. A method 900 may include one or more features in the sensing method in the aforementioned embodiments. In an implementation, the method further includes: S910, a first communication device receives second information from a second communication device, where the second information is used for providing information of a first sensing service and/or updated information of second sensing service.

In an implementation, the second information is configured by the second communication device according to sensing information and/or the first information sent by the first communication device.

In embodiments of the disclosure, after receiving the first information, the second communication device may send the second information to the first communication device according to the first information. Or, after receiving sensing information of the second sensing service, the second communication device may send the second information to the first communication device according to the sensing information.

In some examples, the second information can indicate whether the first communication device is to activate the first sensing service. If yes, the first communication device may activate subsequent first sensing service of the second sensing service based on an indication of the second information; otherwise, the first communication device may not activate the first sensing service according to the indication of the second information.

In some examples, the second information may provide updated information of the second sensing service to the first communication device, for example, configuration of the updated sensing signal. The first communication may measure the updated sensing signal according to the second information.

In embodiments of the disclosure, after receiving the sensing information of the second sensing service, the second communication device may send the second information to the first communication device according to the sensing information. The second information may indicate whether the first communication device is to activate the first sensing service. If yes, the first communication device may activate the subsequent first sensing service of the second sensing service.

In an implementation, the first information is used for requesting the second communication device to indicate to activate the first sensing service and/or provide configuration of the first sensing service.

In embodiments of the disclosures, if the first information sent by the first communication device to the second communication device is used for requesting the second communication device to indicate to activate the first sensing service, then the second information sent back by the second communication device to the first communication device may indicate to activate the first sensing service. If the first information sent by the first communication device to the second communication device is used for requesting the second communication device to provide configuration of the first sensing service, then the second information sent back by the second communication device to the first communication device may include configuration of the first sensing service.

For example, the first communication device can send the first information to the second communication device based on a result of one sensing service, requesting the second communication device, such as a network device or other terminal, to provide the information of a next sensing service, such as whether to activate the next sensing service and/or configuration of the next sensing service. If the first information received by the second communication device is used for requesting to indicate to the first communication device to activate the next sensing service, the second communication device may send the second information to the first communication device to indicate to activate the next sensing service, and the first communication device may activate the next sensing service after receiving the second information. If the second information is not received or the second information indicates to stop sensing, the first communication device may not activate the next sensing service. In this regard, the first communication device may activate sensing services according to sensing requirements, which is conducive to efficient utilization of air interface transmission resources and energy conservation for the devices compared to continuous sensing.

In an implementation, the first information is used for requesting the second communication device to update configuration of a sensing signal of the second sensing service.

In embodiments of the disclosure, if the first information sent by the first communication device to the second communication device, is used for requesting the second communication device to update configuration of the sensing signal of the second sensing service, the second information sent back by the second communication device to the first communication device can include configuration of an updated sensing signal of the second sensing service, such as a sensing RS.

In an implementation, the first communication device is a UE, the second communication device is the network device, the first information is carried by radio resource control (RRC) signaling and/or a media access control control-element (MAC CE), where the first information is used for requesting the network device to update a time-frequency resource of a sensing signal sent over a Uu interface or a PC5 interface. For example, the UE (such as an SRx UE) sends RRC signaling carrying the first information to the network device (such as a gNB), requesting the network device to update the time-frequency resource of the sensing signal of the second sensing service sent over the Uu interface or the PC5 interface. For another example, the UE sends the MAC CE carrying the first information to the network device, requesting the network device to update the time-frequency resource of the sensing signal of the second sensing service sent over the Uu interface or the PC5 interface.

In an implementation, the first communication device is a first UE, the second communication device is a second UE, the first information is carried by one of RRC signaling, a MAC CE, or sidelink control information (SCI), where the first information is used for requesting the second UE to update a sensing signal sent over the PC5 interface. For example, the first UE sends RRC signaling carrying the first information to the second UE, requesting the second UE to update the sensing signal sent over the PC5 interface. For another example, the first UE sends the MAC CE carrying the first information to the second UE, requesting the second UE to update the sensing signal sent over the PC5 interface. For another example, the first UE sends SCI carrying the first information to the second UE, requesting the second UE to update the sensing signal sent over the PC5 interface.

In an implementation, the first UE is a sensing receiver, the second UE is an SS or a sensing transmitter. For example, the SRx UE sends RRC signaling carrying the first information to the SS UE, requesting the SS UE to update the sensing signal sent over the PC5 interface. For another example, the SRx UE sends the MAC CE carrying the first information to an STx UE, requesting the STx UE to update the sensing signal sent over the PC5 interface. For another example, the SRx UE sends SCI carrying the first information to the STx UE, requesting the STx UE to update the sensing signal sent over the PC5 interface.

In an implementation, the first communication device is the UE, the second communication device is a first network device, the first information is carried by RRC signaling and/or MAC CE, where the first information is used for requesting the first network device to trigger a second network device to send a sensing signal of the first sensing service. For example, the UE (such as the SRx UE) sends RRC signaling carrying the first information to the first network device (such as a serving gNB), requesting the serving gNB to trigger another gNB to send the sensing signal of the first sensing service. For another example, the UE (such as the SRx UE) sends the MAC CE carrying the first information to the first network device (such as the serving gNB), requesting the serving gNB to trigger another gNB to send the sensing signal of the first sensing service.

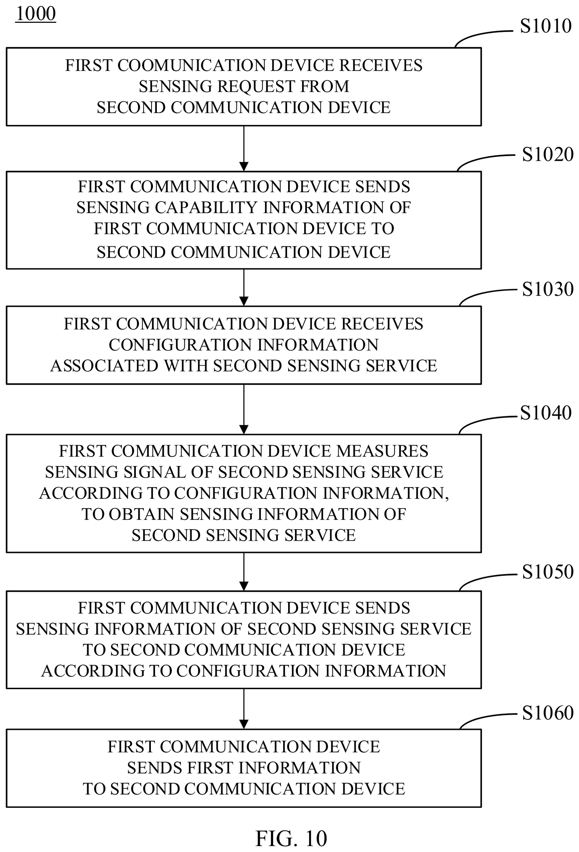

FIG. 10 is a schematic flowchart of a sensing method according to another embodiment of the disclosure. A method 1000 may include one or more features of the sensing method in the aforementioned embodiments of the disclosure. In an implementation, as illustrated in FIG. 10, the method further includes: S1010, a first communication device receives a sensing request from a second communication device, where the sensing request is used for initiating a sensing session between the first communication device and the second communication device.

In an implementation, the method further includes: S1020, the first communication device sends sensing capability information of the first communication device to the second communication device, where the sensing capability information indicates whether the first communication device is allowed to provide first information.

In embodiments of the disclosure, the second communication device may send the sensing request to the first communication device, to initiate the sensing session between the first communication device and the second communication device. The first communication device may send the sensing capability information of the first communication device to the second communication device after receiving the sensing request. The sensing capability information may include, in addition to general capability information of the first communication device, sensing capability information indicating whether the first communication device is allowed to provide the first information. If the first communication device is not allowed to provide the first information, the first communication device may not subsequently send the first information to the second communication device. If the first communication device is allowed to provide the first information, the first communication device may subsequently send the first information to the second communication device.

In an implementation, the method further includes: S1030, the first communication device receives configuration information associated with the second sensing service, where the configuration information includes at least one of: sensing signal configuration information, sensing measurement configuration information, or sensing information reporting configuration information. In embodiments of the disclosure, after the first communication device sends the first information to the second communication device, the second communication device may also send the configuration information associated with the second sensing service to the first communication device. The configuration information may include sensing signal configuration information associated with the second sensing service, such as a sensing RS. The configuration information may include sensing measurement configuration information associated with the second sensing service, such as a measurement quantity and a measurement period of the second sensing service, etc.. The configuration information may include sensing information reporting configuration information associated with the second sensing service, such as event triggering reporting, periodical reporting, etc.. The aforementioned sensing signal configuration information, sensing measurement configuration information, and sensing information reporting configuration information may be sent through RRC signaling and/or non-access stratum (NAS) dedicated signaling; and may be carried by same signaling or by different signaling.

In an implementation, the configuration information further includes indication information, where the indication information indicates whether the first communication device is allowed to provide the first information. In embodiments of the disclosure, the second communication device may carry the indication information in the configuration information, or may indicate whether the first communication device is allowed to provide the first information via indication information separate from configuration information. If the first communication device is allowed to provide the first information, the first communication device may report the first information to the second communication device after receiving the configuration information or indication information.

In an implementation, the method further includes: S1040, the first communication device measures a sensing signal of the second sensing service according to the configuration information, to obtain sensing information of the second sensing service. In embodiments of the disclosure, the first communication device may measure the sensing signal of the second sensing service according to the sensing signal configuration information and the sensing measurement configuration information in the configuration information. For example, if the sensing signal configuration information includes a reference signal received power (RSRP) as a sensing RS, and the sensing measurement configuration information includes a signal strength as a measurement quantity, then the sensing information obtained by the first communication device after measuring the RSRP may include a strength of the RSRP.

In an implementation, the method further includes: S1050, the first communication device sends the sensing information of the second sensing service to the second communication device according to the configuration information. In embodiments of the disclosure, the first communication device may report the sensing information of the second sensing service according to the sensing information reporting configuration information in the configuration information. For example, if the sensing information reporting configuration information includes a reporting period of 10 ms, then the first communication device may report the sensing RS (such as the strength of the RSRP) every 10 ms.

In an implementation, the sensing information of the second sensing service carries the first information. In embodiments of the disclosure, the aforementioned first information can be reported together with the sensing information, for example, the first information can be carried in the sensing information.

In an implementation, S810 may include: S1060, the first communication device sends the first information to the second communication device according to the configuration information. In embodiments of the disclosure, the aforementioned first information can be reported separately. The first communication device may report the sensing information of the second sensing service according to the sensing information reporting configuration information; and the first communication device may report the first information according to the indication information in the configuration information, which is used for indicating whether the first information is allowed to be provided.

In an implementation, the first information includes at least one of: indication information for requesting the second communication device to configure multi-node cooperative sensing; indication information for requesting the second communication device to send the sensing signal with a first time-frequency resource, where the first time-frequency resource is greater than a set value; indication information for requesting the second communication device to configure per-object sensing; or spatial location information of an object.

For example, if the first information sent by the first communication device includes indication information that requesting the second communication device to configure the multi-node cooperative sensing, then configuration of the multi-node cooperative sensing may be included in the second information sent back by the second communication device. For another example, if the first information sent by the first communication device includes indication information requesting the second communication device to send the sensing signal with a larger first time-frequency resource, then the second communication device may send the sensing signal with the first time-frequency resource, and configuration of the first time-frequency resource may be included in the second information sent back by the second communication device. For another example, if the first information sent by the first communication device includes indication information requesting the second communication device to configure the per-object sensing, then configuration of the per-object sensing may be included in the second information sent back by the second communication device. In this case, the first information may include the spatial location information of an object to assist the network for further operations, such as further configuring a sensing RS of a narrow beam or further selecting a suitable STx node.

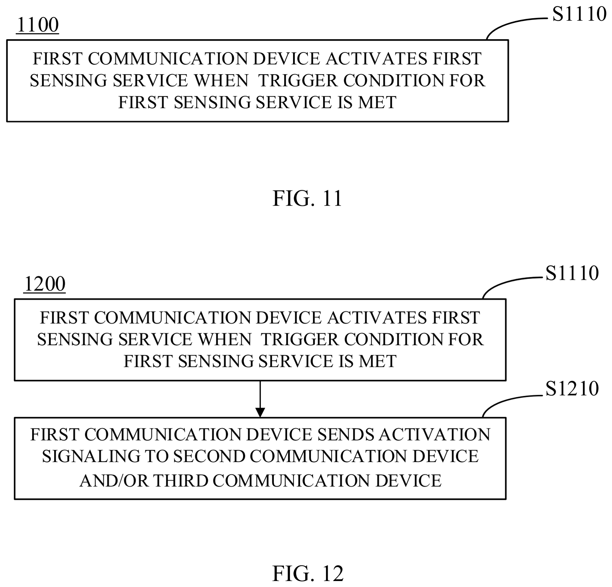

FIG. 11 is a schematic flowchart of a sensing method according to another embodiment of the disclosure. A method 1100 may be optionally applied in, but not limited to, any of the scenarios illustrated in FIG. 1 to FIG. 7c. The method includes at least some of the following.

S1110, a first communication device activates a first sensing service when a trigger condition for the first sensing service is met. In embodiments of the disclosure, the first communication device can be a sensing receiver. The sensing receiver can be further referred to as SRx node, SRx terminal, or SRx UE, etc. The trigger condition for the first sensing service can be obtained in advance. If the trigger condition for the first sensing service is met, the first communication device may activate the first sensing service; if the trigger condition for the first sensing service is not met, the first communication device may not activate the first sensing service.

In an implementation, activating the first sensing service includes: measuring a sensing signal of the first sensing service to obtain sensing information of the first sensing service. For example, measuring a RSRP of the first sensing service to obtain a strength of the RSRP.

In an implementation, the method further includes: the first communication device receives the trigger condition for the first sensing service from the second communication device. In embodiments of the disclosure, the first communication device may obtain the trigger condition for the first sensing service from the second communication device. The second communication device may be a network device, a sensing transmitter or an SS UE. The second communication device may be a network element with SF. The sensing transmitter may be referred to as STx node, STx terminal, STx UE, etc. In UE sensing, the STx terminal may send a sensing signal (such as a sensing RS), and the SRx terminal may receive the sensing signal and obtain a sensing measurement quantity.

In an implementation, the trigger condition for the first sensing service includes an event related to sensing information of the second sensing service.

In embodiments of the disclosure, the trigger condition for the first sensing service may be related to the second sensing service. The first sensing service and the second sensing service may be UE-based sensing services. In the UE-based sensing, a terminal may be operable as the SRx node to measure the sensing signal and calculate to obtain a sensing result. The first communication device may first execute the second sensing service to obtain a preliminary sensing result, and may determine whether the trigger condition for the first sensing service is met based on the preliminary sensing result. If the trigger condition is met, the first sensing service is activated and the previous sensing service is not continued, thereby being conducive to efficient utilization of transmission resources and energy conservation. For example, the second sensing service may be a non-cooperative sensing, a coarse sensing, or a per-area sensing, and the first sensing service may be a cooperative sensing based on the second sensing service, a fine sensing, or a per-object sensing.

In some examples, the first communication device may determine whether a trigger condition for cooperative sensing is met based on a sensing result of non-cooperative sensing; if the trigger condition is met, cooperative sensing is performed for supporting mobility and improving sensing accuracy.

In some examples, the first communication device may determine whether a trigger condition for fine sensing is met based on a sensing result of coarse sensing; if the trigger condition is met, fine sensing is performed for energy conservation.

In some examples, the first communication device may determine whether a trigger condition for per-object sensing is met based on a sensing result of per-area sensing of a large base station; if the trigger condition is met, per-object sensing of a small station is performed.

In embodiments of the disclosure, the terminal triggers further cooperative sensing, fine sensing, or per-object sensing of a small base station based on non-cooperative sensing, coarse sensing, or per-area sensing of a large base station respectively, which is conducive to efficient utilization of air interface transmission resources and energy conservation for the terminal.

In an implementation, the event related to the sensing information of the second sensing service includes at least one of: sensing information obtained by the second sensing service reaches a sensing information threshold; a variation of the sensing information obtained by the second sensing service reaches a sensing information variation threshold; or a trigger timer and/or a trigger counter corresponding to the second sensing service meets a trigger value.

For example, if the RSRP obtained by the second sensing service reaches a RSRP threshold, the trigger condition is met. For another example, if a variation of the RSRP obtained by the second sensing service reaches a RSRP variation threshold, the trigger condition is met. For another example, if occurrence of a sensing object obtained by the second sensing service reaches 4 on the trigger counter, which is greater than a pre-set trigger value of 3, the trigger condition is met.

In an implementation, the trigger condition for the first sensing service includes a condition related to a location of a sensing object. In embodiments of the disclosure, the trigger condition for the first sensing service may be related to status of the sensing object, such as the location of the sensing object. For example, if the sensing object of the first sensing service is close to the first communication device or within a specific area, the first sensing service may be activated. If the sensing object of the first sensing service is far away from the first communication device or is not within a specific area, the first sensing service may not be activated.

In an implementation, the condition related to the location of the sensing object includes at least one of: a relative distance between the sensing object and the first communication device is less than a distance threshold; or the sensing object is located in a configured geographical area.

For example, if the relative distance between the sensing object (UE) of the first sensing service and the SRx UE is less than a distance threshold, the SRx UE may activate the first sensing service. For another example, if the sensing object (UE) of the first sensing service is within a circular area delimited with a certain longitude and latitude reference point as the center and a certain set value as the radius, the SRx UE may activate the first sensing service. For another example, if the sensing object (UE) of the first sensing service is within a specific polygon area, the SRx UE may activate the first sensing service.

In an implementation, the method further includes at least one of: the first communication device sends first signaling to a sensing object periodically, where the first signaling is used for requesting for location information of the sensing object; the first communication device receives location information of the sensing object sent by the sensing object periodically; or the first communication device receives location information of the sensing object sent by the sensing object based on an event triggered by a location-based condition, where the location-based condition is configured by the network device for the sensing object.

In embodiments of the disclosure, the location information of the sensing object may be periodically requested from the sensing object (UE) by the first communication device, or may be periodically reported to the first communication device by the sensing object (UE) autonomously, or may be reported to the first communication device by the sensing object (UE) when a trigger event that meets certain conditions occurs. For example, the network may configure an event triggered by a UE location-based condition for the sensing object (UE), and the sensing object (UE) may notify the sensing receiver and the sensing transmitter respectively when the condition is met and the event is triggered.

FIG. 12 is a schematic flowchart of a sensing method according to another embodiment of the disclosure. The method further includes one or more features of the sensing method in the aforementioned embodiments of the disclosure. The method further includes: S1210, a first communication device sends an activation signaling to a second communication device and/or a third communication device, where the activation signaling is used for notifying the second communication device and/or the third communication device to activate transmission of the sensing signal of the first sensing service. If a trigger condition for the first sensing service is met, the first communication device may send the activation signaling to the second communication device and/or the third communication device associated with the first sensing service. The activation signaling may notify the second communication device and/or the third communication device to activate the transmission of the sensing signal of the first sensing service.

In an implementation, the activation signaling is at least one of RRC signaling, MAC signaling, or physical layer (PHY) signaling. For example, the sensing receiver may indicate to, through RRC signaling, MAC signaling, or PHY signaling, a sensing transmitter to activate the transmission of the sensing signal of the first sensing service over a Uu interface or a PC5 interface.

In an implementation, the third communication device is a network device or a sensing transmitter.

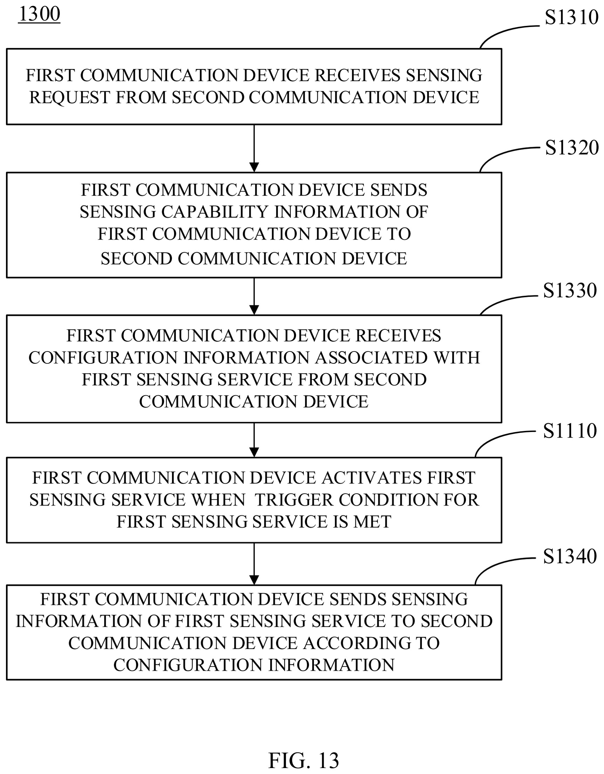

FIG. 13 is a schematic flowchart of a sensing method according to another embodiment of the disclosure. A method 1300 may include one or more features of the sensing method in the aforementioned embodiments of the disclosure. In an implementation, the method further includes: S1310, a first communication device receives a sensing request from a second communication device, where the sensing request is used for initiating a sensing session between the first communication device and the second communication device.

In an implementation, the method further includes: S1320, the first communication device sends sensing capability information of the first communication device to the second communication device, where the sensing capability information indicates whether the first communication device is allowed to activate a first sensing service autonomously based on a trigger condition.

In embodiments of the disclosure, the second communication device may send the sensing request to the first communication device, to initiate the sensing session between the first communication device and the second communication device. The first communication device may send the sensing capability information of the first communication device to the second communication device after receiving the sensing request. The sensing capability information may include, in addition to general capability information of the first communication device, sensing capability information indicating whether the first communication device is allowed to activate the first sensing service autonomously based on a trigger condition. If the first communication device is not allowed to activate the first sensing service autonomously based on the trigger condition, the first communication device may not subsequently activate the first sensing service autonomously based on the trigger condition. If the first communication device is allowed to activate the first sensing service autonomously based on the trigger condition, the first communication device may subsequently activate the first sensing service autonomously when the trigger condition is met.

In an implementation, the method further includes: S1330, the first communication device receives configuration information associated with the first sensing service from the second communication device, where the configuration information includes at least one of: sensing signal configuration information, sensing measurement configuration information, or sensing information reporting configuration information. The configuration information may further include a trigger condition for the first sensing service. The configuration information and the trigger condition may also be sent separately, which can be flexibly set according to the actual needs. In embodiments of the disclosure, the second communication device may also send the configuration information associated with the first sensing service to the first communication device. The configuration information may include sensing signal configuration information associated with the first sensing service, such as a sensing RS. The configuration information may include sensing measurement configuration information associated with the first sensing service, such as a measurement quantity and a measurement period of the first sensing service, etc.. The configuration information may include sensing information reporting configuration information associated with the first sensing service, such as event triggering reporting, periodical reporting, etc.. The aforementioned sensing signal configuration information, sensing measurement configuration information, and sensing information reporting configuration information may be sent through RRC signaling and/or NAS signaling; and may be carried by same signaling or by different signaling.

In an implementation, after performing sensing measurement based on the configuration information when the trigger condition is met, the method further includes: S1340, the first communication device sends sensing information of the first sensing service to the second communication device according to the configuration information. In embodiments of the disclosure, the first communication device may measure a sensing signal of the first sensing service according to the sensing signal configuration information and the sensing measurement configuration information in the configuration information, and thereafter report the sensing information of the first sensing service according to the sensing information reporting configuration information in the configuration information. For example, if the sensing signal is a sensing RS such as a RSRP, and the sensing information reporting configuration information is a reporting period of 10 ms, then the first communication device may report the sensing RS (such as a strength of the RSRP) every 10 ms.

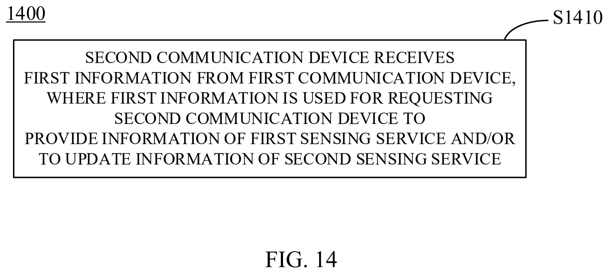

FIG. 14 is a schematic flowchart of a sensing method according to another embodiment of the disclosure. A method 1400 may be optionally applied in, but not limited to, any of the scenarios illustrated in FIG. 1 to FIG. 7c. The method includes at least some of the following.

S1410, a second communication device receives first information from a first communication device, where the first information is used for requesting the second communication device to provide information of the first sensing service and/or to update information of the second sensing service.

In an implementation, the first sensing service is a subsequent sensing service of the second sensing service of the first communication device.

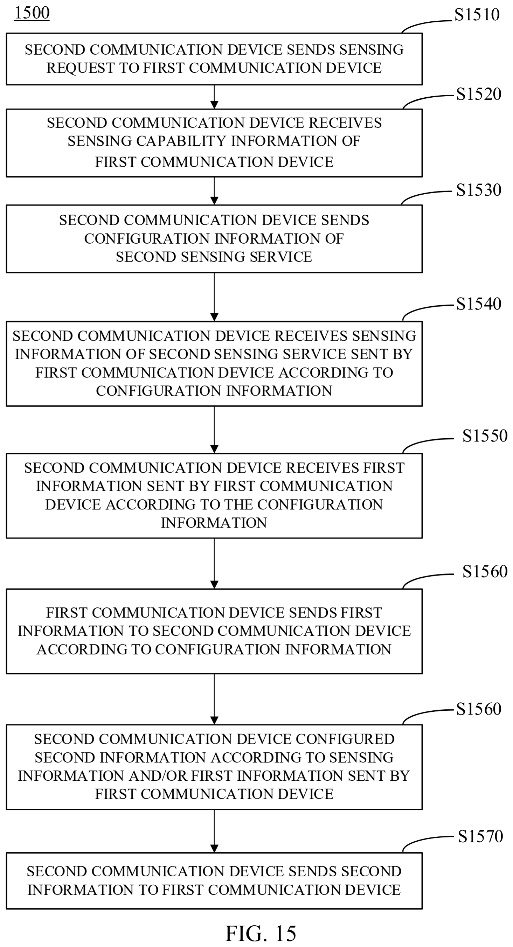

FIG. 15 is a schematic flowchart of a sensing method according to another embodiment of the disclosure. A method 1500 may include one or more features of the sensing method in the aforementioned embodiments of the disclosure. In an implementation, the method further includes: S1510, a second communication device sends a sensing request to a first communication device, where the sensing request is used for initiating a sensing session between the first communication device and the second communication device.

In an implementation, as illustrated in FIG. 15, the method further includes: S1520, the second communication device receives sensing capability information of the first communication device, where the sensing capability information indicates whether the first communication device supports providing the first information.

In an implementation, the method further includes: S1530, the second communication device sends configuration information associated with the second sensing service, where the configuration information includes at least one of: sensing signal configuration information, sensing measurement configuration information, or sensing information reporting configuration information.

In an implementation, the configuration information further includes indication information, where the indication information indicates whether the first communication device is allowed to provide the first information.

In an implementation, the method further includes: S1540, the second communication device receives sensing information of the second sensing service sent by the first communication device according to the configuration information. The sensing information of the second sensing service is obtained by measuring a sensing signal of the second sensing service by the first communication device according to the configuration information.

In an implementation, the sensing information of the second sensing service carries the first information.

In an implementation, the second communication device receiving the first information from the first communication device includes: S1550, the second communication device receives the first information sent by the first communication device according to the configuration information.

In an implementation, the first information includes at least one of: indication information for requesting the second communication device to configure multi-node cooperative sensing; indication information for requesting the second communication device to send a sensing signal with a first time-frequency resource, where the first time-frequency resource is greater than a set value; indication information for requesting the second communication device to configure per-object sensing; or spatial location information of an object.

In an implementation, the first information is used for requesting the second communication device to indicate to activate the first sensing service and/or provide configuration of the first sensing service. The method further includes: the second communication device indicates to activate the first sensing service and/or provide configuration of the first sensing service according to the first information.

In an implementation, the first information is used for requesting the second communication device to update configuration of the sensing signal of the second sensing service. The method further includes: the second communication device updates configuration of the sensing signal of the second sensing service according to the first information.

In an implementation, the first communication device is a UE, the second communication device is a network device, the first information is carried by RRC signaling and/or a MAC CE, where the first information is used for requesting the network device to update a time-frequency resource of the sensing signal sent over a Uu interface or a PC5 interface. The method further includes: the network device updates the time-frequency resource of the sensing signal sent over the Uu interface or the PC5 interface according to the first information.

In an implementation, the first communication device is a first UE, the second communication device is a second UE, the first information is carried by one of RRC signaling, a MAC CE, or SCI, where the first information is used for requesting the second UE to update a sensing signal sent over the PC5 interface. The method further includes: the second UE updates the sensing signal sent over the PC5 interface according to the first information.

In an implementation, the first UE is a sensing receiver, and the second UE is an SS or a sensing transmitter.

In an implementation, the first communication device is a UE, the second communication device is a first network device, the first information is carried by RRC signaling and/or a MAC CE, where the first information is used for requesting the first network device to trigger the second network device to send a sensing signal of the first sensing service. The method further includes: the first network device triggers, according to the first information, the second network device to send the sensing signal of the first sensing service.

In an implementation, the method further includes: S1560, the second communication device configures the second information according to sensing information and/or the first information sent by the first communication device.

In an implementation, the method further includes: S1570, the second communication device sends the second information to the first communication device, where the second information is used for providing (indicating) information of the first sensing service and/or updated information of the second sensing service.

For the specific examples of performing the sensing method 1400 and 1500 by the second communication device in embodiments of the disclosure, reference can be made to corresponding descriptions of the second communication device in the aforementioned sensing method 800, 900 and 1000, which will not be repeated herein for the sake of simplicity.

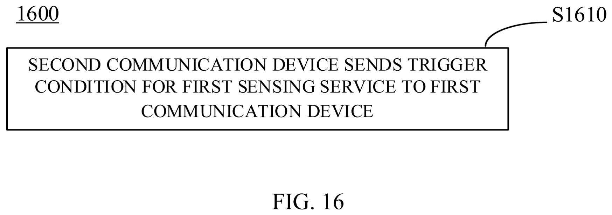

FIG. 16 is a schematic flowchart of a sensing method according to another embodiment of the disclosure. A method 1600 may be optionally applied in, but not limited to, any of the scenarios illustrated in FIG. 1 to FIG. 7c. The method includes at least some of the following.

S1610, a second communication device sends a trigger condition for a first sensing service to a first communication device, where the trigger condition is used for indicating to the first communication device to activate the first sensing service when the trigger condition for the first sensing service is met.

In an implementation, activating the first sensing service includes: measuring a sensing signal of the first sensing service to obtain sensing information of the first sensing service.

In an implementation, the trigger condition for the first sensing service includes an event related to sensing information of the second sensing service.

In an implementation, the event related to the sensing information of the second sensing service includes at least one of: sensing information obtained by the second sensing service reaches a sensing information threshold; a variation of the sensing information obtained by the second sensing service reaches a sensing information variation threshold; or a trigger timer and/or a trigger counter corresponding to the second sensing service meets a trigger value.

In an implementation, the trigger condition for the first sensing service includes a condition related to a location of a sensing object.

In an implementation, the condition related to the location of the sensing object includes at least one of: a relative distance between the sensing object and the first communication device is less than a distance threshold; or the sensing object is located in a configured geographic area.

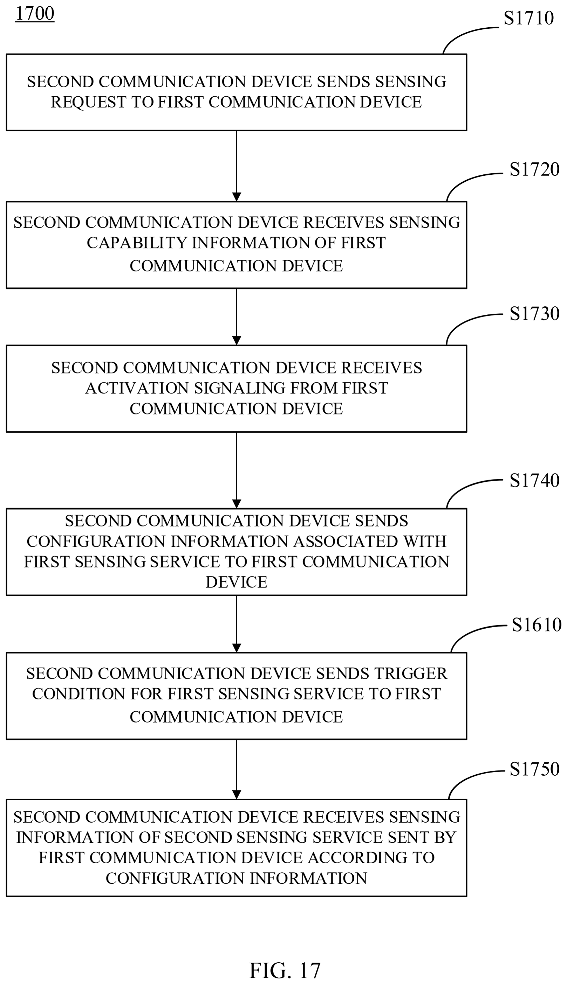

FIG. 17 is a schematic flowchart of a sensing method according to another embodiment of the disclosure. A method 1700 may include one or more features of the sensing method in the aforementioned embodiments of the disclosure. In an implementation, the method further includes: S1710, a second communication device sends a sensing request to a first communication device, where the sensing request is used for initiating a sensing session between the first communication device and the second communication device.

In an implementation, the method further includes: S1720, the second communication device receives sensing capability information of the first communication device, where the sensing capability information indicates whether the first communication device is allowed to activate a first sensing service autonomously based on a trigger condition.

In an implementation, the method further includes: S1730, the second communication device receives an activation signaling from the first communication device, where the activation signaling is used for notifying the second communication device to activate transmission of the sensing signal of the first sensing service.

In an implementation, the activation signaling is at least one of RRC signaling, MAC signaling, or PHY signaling.

In an implementation, the method further includes: S1740, the second communication device sends configuration information associated with the first sensing service to the first communication device, where the configuration information includes at least one of: sensing signal configuration information, sensing measurement configuration information, or sensing information reporting configuration information. The configuration information may further include a trigger condition for the first sensing service. The configuration information and the trigger condition may also be sent separately, which can be flexibly set according to the actual needs.

In an implementation, as illustrated in FIG. 17, the method further includes: S1750, the second communication device receives sensing information of the first sensing service sent by the first communication device according to the configuration information.

For the specific examples of performing the sensing method 1600 and 1700 by the second communication device in embodiments of the disclosure, reference can be made to the corresponding descriptions of the second communication device in the aforementioned sensing method 1100, 1200 and 1300, which will not be repeated herein for the sake of simplicity.

In embodiments of the disclosure, in an implementation, an SRx node requests an SF to configure further sensing service or to update the sensing service based on a preliminary sensing result. In an implementation, a network may pre-configure the first sensing service and the trigger condition for the first sensing service, when the trigger condition is met, the SRx node activates the first sensing service autonomously. The SRx node notifies an STx node to activate the transmission of the sensing signal of the first sensing service. The trigger condition may be an event related to sensing information obtained by the second sensing service, or may be a location of a UE, etc. Several specific examples are introduced as follow.

### Example 1

The SRx node requests the SF to configure further sensing service based on the preliminary sensing result.

For example, the SRx node may request the SF for cooperative sensing based on a sensing result of non-cooperative sensing, to support mobility and improve sensing accuracy.

For another example, the SRx node may request the SF for fine sensing based on a sensing result of coarse sensing, to achieve energy conservation.

For another example, the SRx node may request the SF for triggering per-object sensing of a small station based on a sensing result of per-area sensing of a large base station; inter-base station interaction signaling, such as Xn signaling or SF signaling, may also be required.

Example 1 is applicable to a UE-based sensing service, which means that the UE is operable as the SRx node to measure a sensing signal and calculate to obtain a sensing result. With regard to a SF-based sensing service, the UE or a gNB may report a sensing measurement quantity, and the SF may perform sensing measurement to obtain the sensing result, thereby the SF may trigger further sensing service according to the sensing result.

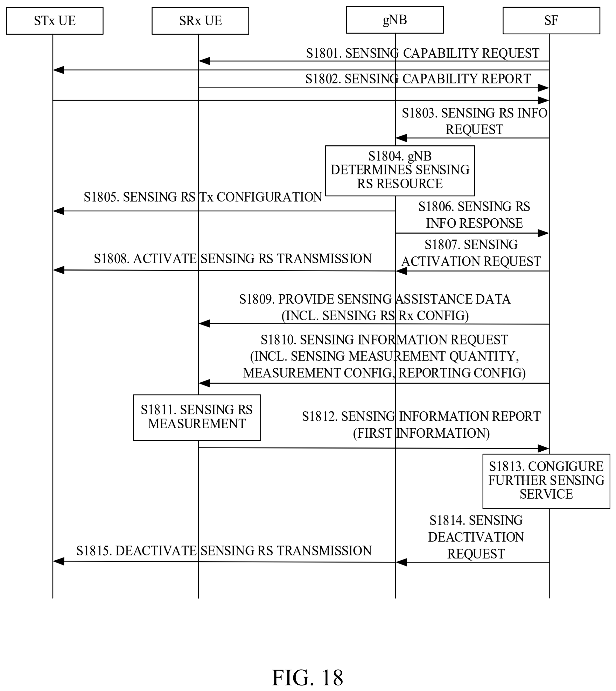

FIG. 18 illustrates a specific implementation process of Example 1 (SRx node-network device).

S1801, the network device (such as SF, an LMF, or an AMF) initiates the sensing session between the SRx node and the network device based on a sensing request (SR). Example of the sensing request may be a mobile terminated sensing request (MT-SR), a mobile originated sensing request (MO-SR), a network induced sensing request (NI-SR), etc. For example, the SF may send a sensing capability request to the SRx node (such as an SRx UE) and/or the STx node (such as an STx UE).

S1802, the SRx node reports the sensing capability information to the network device based on the sensing request from the network device. The sensing capability information includes information of whether the SRx node supports providing auxiliary information, where the auxiliary information is used for requesting to activate a next sensing service and/or provide sensing service configuration expected by the SRx node. For example, the SRx UE reports a sensing capability report to the SF, where the sensing capability report includes the sensing capability information.

For S1803 to S1808, reference can be made to S403 to S408.

S1809, the network device (SF) indicates to the SRx node (SRx UE) to provide sensing assistance data (including sensing RS Rx configuration).

S1810, the SRx node receives sensing RS configuration information, sensing measurement configuration (such as a measurement quantity and a measurement period), and sensing information reporting configuration (such as event triggering and periodical reporting) sent by the network device. The message carrying the configuration information may be sent through RRC signaling/ NAS dedicated signaling, or may be carried in multiple signaling. The message may be a sensing information request.

Furthermore, indicate whether the SRx node is allowed to provide auxiliary information for activating the next sensing service and/or providing sensing service configuration expected by the SRx node.

S1811, the SRx node performs measurement on sensing RS according to the aforementioned configuration, and calculates to obtain corresponding sensing information.

S1812, the SRx node reports the sensing information to the network device according to reporting configuration. For example, the SRx UE reports a message including a sensing information report to the SF, where the message carries auxiliary information indicating whether to request to activate the next sensing service and expected sensing service configuration.

For example, the message may carry indication information requesting the network to configure multi-node cooperative sensing; may carry indication information requesting the network to use larger time-frequency resource to send the sensing RS; or may carry indication information requesting the network to configure per-object sensing. Optionally, spatial location information of an object may be further provided to assist the network for further configuring a sensing RS of a narrow beam or further selecting a suitable STx node. The auxiliary information may also be sent separately from the sensing information report message.

S1813, according to the auxiliary information and the sensing information reported by the SRx node, the network device configures further sensing service, for example, cooperative sensing, sensing signal resource adjustment, and activate further per-object sensing, depend on network implementations. For example, a current sensing session may be terminated; or the current sensing session may be continued and configuration of a sensing RS may be updated; or the current sensing session may be terminated and a new sensing session may be activated.

S1814, the SF sends a sensing deactivation request to the gNB.

S1815, the gNB indicates to the STx to deactivate transmission of the sensing RS.

### Example 2

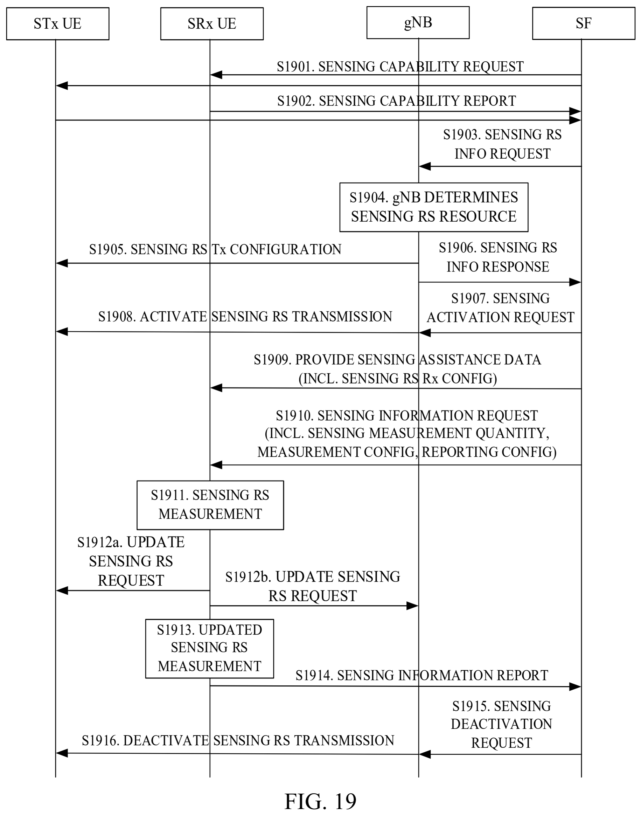

FIG. 19 illustrates a process of a sensing method.

S1901, a first network device (such as an SF, an LMF, or an AMF) initiates a sensing session between an SRx node and the first network device based on a sensing request. For a detailed explanation, reference may be made to S1801.

S1902, the SRx node (such as an SRx UE) reports sensing capability information to the first network device based on a request from the first network device. The sensing capability information includes indication information of whether it supports the SRx node to directly request a second network device (such as serving gNB) or a UE (such as an STx UE) to update a sensing RS. For example, the STx UE reports a sensing capability report to the SF, where the sensing capability report includes the sensing capability information.

For S1903 to S1908, reference can be made to S403 to S408.

S1909, the network device (SF) indicates to the SRx node (SRx UE) to provide sensing assistance data (including sensing RS Rx configuration).

S1910, the SRx node receives sensing RS configuration information, sensing measurement configuration information (such as a measurement quantity and a measurement period), and sensing information reporting configuration information (such as event triggering and periodical reporting) sent by the first network device. A message carrying configuration information may be sent through RRC/NAS dedicated signaling, or may be carried in multiple signaling. The message may be a sensing information request.

Furthermore, indication information indicating whether the SRx node is allowed to directly request the STx UE/serving gNB to update the sensing RS may further be provided.

S1911, the SRx node performs measurement on the sensing RS according to the aforementioned configuration, and calculates to obtain corresponding sensing information.

S1912a and S1912b, based on the sensing information, the SRx node requests the STx UE, an SS UE or a serving gNB to update the sensing RS.

For example, when the SRx node is the UE, the UE sends auxiliary information to the gNB through RRC signaling/a MAC CE, directly requesting to update a time-frequency resource of a sensing RS sent over a Uu interface or a PC5 interface.

In another example, when the SRx node is the UE, the UE requests, through RRC signaling/the MAC CE/SCI, the SS UE or the STx UE to update the sensing RS sent over the PC5 interface.

In another example, when the SRx node is the UE, the UE sends auxiliary information to serving gNB through RRC signaling/the MAC CE, requesting to trigger transmission of sensing signal at other gNBs (such as small base stations), this requires support from Xn signaling sent between gNBs.

Optionally, the SRx node receives a confirmation message for updating the sensing RS sent back by a corresponding node, where the confirmation message may carry a new configuration of the sensing RS.

S1913, the SRx node measures the updated sensing RS and calculates to obtain corresponding sensing information.

S1914, the SRx node reports the sensing information to the first network device.

S1915, the first network device sends a sensing deactivation request to the second network device.

S1916, the second network device indicates to the SRx node to deactivate transmission of the sensing RS.

### Example 3

A network pre-configures a first sensing service and a trigger condition for the first sensing service. When the trigger condition is met, an SRx node activates the first sensing service autonomously, and indicates to an STx node to activate transmission of a sensing signal of the first sensing service. The trigger condition may be an event related to sensing information obtained by the second sensing service; the trigger condition may be information such as a location of a UE.

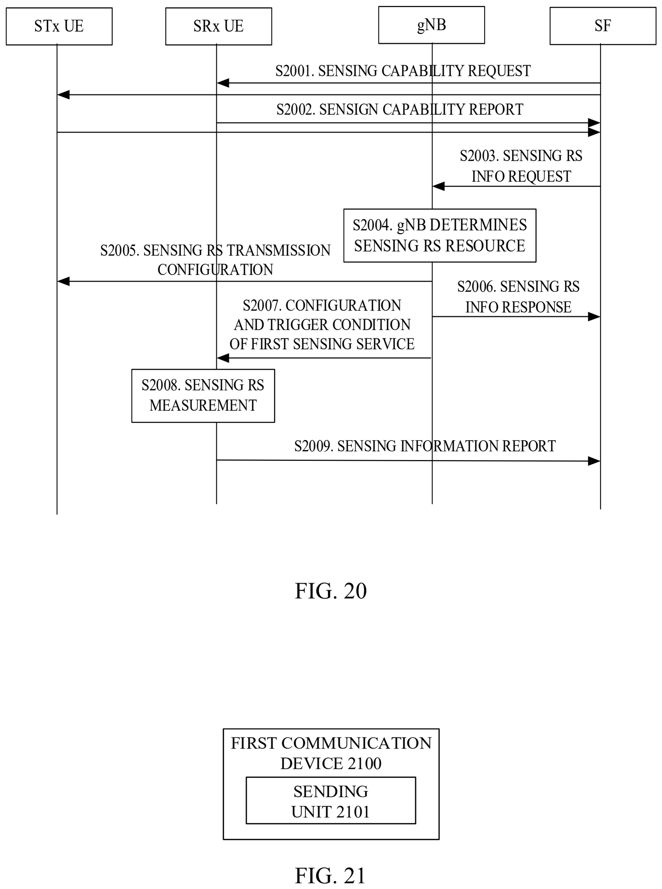

FIG. 20 illustrates a specific implementation process of Example 3 (SRx node-network device).

S2001, a network device initiates a sensing session between an SRx node and the network device based on a sensing request. For detailed explanation, reference can be made to S1801.

S2002, the SRx node reports sensing capability information to the network device based on a request from the network device, where the sensing capability information includes indication information of whether the SRx node is allowed to activate the sensing service autonomously based on a trigger condition. For example, an STx UE sends a sensing capability report to an SF, where the sensing capability report includes the sensing capability information.

For S2003 to S2006, reference may be made to S403 to S406.

S2007, the SRx node receives configuration information associated with a first sensing service from the network device, such as sensing RS configuration, sensing measurement configuration (such as a measurement quantity and a measurement period), and sensing information reporting configuration (such as event triggering and periodical reporting), etc.; and receives a trigger condition for the first sensing service. A message carrying the configuration information and the trigger condition may be sent through RRC/NAS dedicated signaling, or may be carried in multiple signaling. The trigger condition for the first sensing service may include the following.
(1) An event related to sensing information of a second sensing service, such as a sensing information threshold and/or a sensing information variation threshold and/or sensing information timer and counter. Correspondingly, the network also needs to configure the configuration information associated with the second sensing service, such as sensing RS configuration and sensing measurement configuration (such as a measurement quantity and a measurement period).
   (1-1) For example, if the sensing information obtained by the second sensing service is a signal strength, and the network indicates a corresponding signal strength threshold or a signal strength variation threshold, the trigger condition for the first sensing service is configured as: when a RSRP of a sensing RS of the second sensing service measured by the SRx node is greater than/less than a RSRP threshold, the event is triggered; when a variation of the RSRP of the sensing RS of the second sensing service measured by the SRx node is greater than or equal to the signal strength variation threshold, the event is triggered.
   (1-2) For example, if the second sensing service is intrusion detection or detection of existence of a sensing object, and the sensing information obtained is whether the object exists, the network configures the trigger condition for the first sensing service as a trigger timer and a trigger counter.
      For example, the trigger counter and the trigger timer are set as follows.
      a. A count value of the trigger counter is initially set to 0.
      b. If the SRx node detects that the sensing object exists, at least one of the following may be performed: the SRx node starts or restarts the trigger timer; the count value of the trigger counter increases by 1; or, the count value of the trigger counter may be set to 0 after the event is triggered as the count value of the trigger counter is greater than or equal to a maximum value initially set by the network, which indicates a continuous detection of the presence of the sensing object.
      c. If the trigger timer expires, the count value of the trigger counter may be set to 0.
(2) UE location-based condition (when the sensing object is device-based)
   (2-1) For example, the network configures the trigger condition for the first sensing service as a distance threshold related to the SRx node. When a relative distance between the sensing object (UE) and the SRx node is less than the distance threshold, the event is triggered.
   (2-2) For example, the network configures the trigger condition for the first sensing service as geographic area information, such as (latitude and longitude reference point and radius) or polygonal area. When the sensing object (UE) is located in the geographical area, the event is triggered.
   (2-3) In addition, location information of the sensing object (UE) may be obtained through NR locating, global navigation satellite system (GNSS) locating, etc.
   (2-4) The SRx node may need to support signaling interaction with the sensing object (UE) to obtain the location information of the sensing object (UE), for example, the SRx node requests the location information of the sensing object (UE) periodically; the sensing object (UE) sends the location information to the SRx node periodically; the network configures an event triggered by UE location-based condition to the sensing object (UE), and when the sensing object (UE) triggers the event, respectively notifies the SRx node and the STx node,.

S2008, according to the configuration and the trigger condition, the SRx node performs measurement on a sensing RS of the first sensing service when the trigger condition is met, and calculates to obtain corresponding sensing information.

The SRx node may notify the STx node to activate transmission of the sensing RS of the first sensing service, through RRC signaling, MAC signaling, and PHY signaling; to activate the sensing RS of the first sensing service sent over a Uu interface or a PC5 interface, according to different roles of the nodes.

S2009, the SRx node reports the sensing information to the network device according to reporting configuration.

The network device in the aforementioned examples may be collectively referred to as network elements such as gNB, SF, LMF, and AMF.

If the SRx node is the UE, the network device may be the gNB, the SF, the LMF, or the AMF, etc. In addition, if the UE is in a OOC state and cannot get access to the network, sensing cannot be performed under the control of the network device (such as the gNB, the AMF, or the SF), in this case, the network device may be replaced by an SS UE.

FIG. 21 is a schematic block diagram of a first communication device 2100 according to an embodiment of the disclosure, where the first communication device 2100 includes: a sending unit 2101, configured to send first information to a second communication device, where the first information is used for requesting the second communication device to provide information of a first sensing service and/or to update information of a second sensing service.

In an implementation, the first sensing service is a subsequent sensing service of the second sensing service of the first communication device.

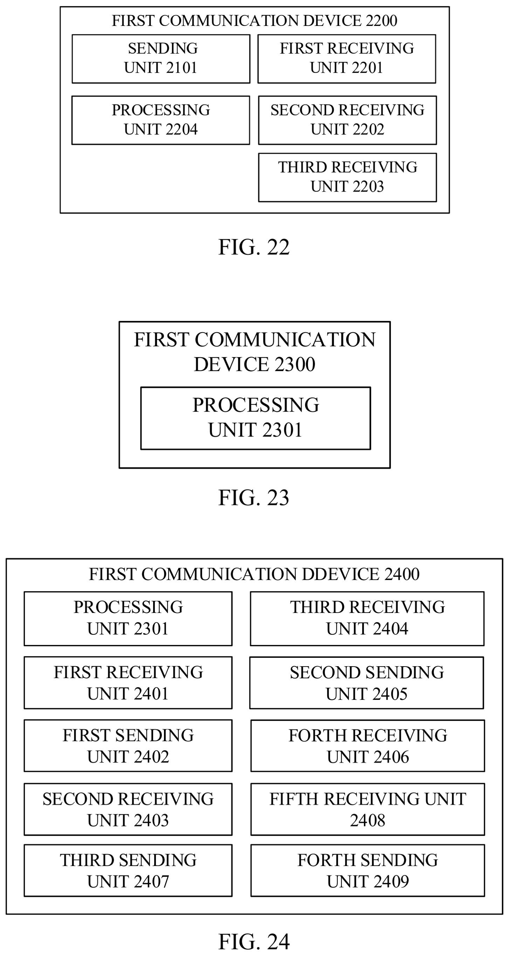

In an implementation, as illustrated in FIG. 22, the first communication device 2200 further includes: a first receiving unit 2201, configured to receive the second information from the second communication device, where the second information is used for providing information of the first sensing service and/or updated information of the second sensing service.

In an implementation, the second information is configured by the second communication device according to sensing information and/or the first information sent by the first communication device.

In an implementation, the first information is used for requesting the second communication device to indicate to activate the first sensing service and/or provide configuration of the first sensing service.

In an implementation, the first information is used for requesting the second communication device to update configuration of a sensing signal of the second sensing service.

In an implementation, the first communication device is a UE, the second communication device is a network device, the first information is carried by RRC signaling and/or a MAC CE, where the first information is used for requesting the network device to update a time-frequency resource of a sensing signal sent over a Uu interface or a PC5 interface.

In an implementation, the first communication device is a first UE, the second communication device is a second UE, the first information is carried by one of RRC signaling, the MAC CE, or SCI, where the first information is used for requesting the second UE to update the sensing signal sent over the PC5 interface.

In an implementation, the first UE is a sensing receiver, and the second UE is an SS or a sensing transmitter.

In an implementation, the first communication device is a UE, the second communication device is a first network device, the first information is carried by RRC signaling and/or the MAC CE, where the first information is used for requesting the first network device to trigger a second network device to send a sensing signal of the first sensing service.

In an implementation, the first communication device further includes: a second receiving unit 2202, configured to receive configuration information associated with the second sensing service, where the configuration information includes at least one of: sensing signal configuration information, sensing measurement configuration information, or sensing information reporting configuration information.

In an implementation, the configuration information further includes indication information, where the indication information indicates whether the first communication device is allowed to provide the first information.

In an implementation, the first communication device further includes: a processing unit 2204, configured to measure the sensing signal of the second sensing service according to the configuration information, to obtain sensing information of the second sensing service.

In an implementation, the sending unit is further configured to send the sensing information of the second sensing service to the second communication device according to the configuration information.

In an implementation, the sensing information of the second sensing service carries the first information.

In an implementation, the sending unit 2101 is further configured to send the first information to the second communication device according to the configuration information.

In an implementation, the first information includes at least one of: indication information for requesting the second communication device to configure multi-node cooperative sensing; indication information for requesting the second communication device to send a sensing signal with a first time-frequency resource, where the first time-frequency resource is greater than a set value; indication information for requesting the second communication device to configure per-object sensing; or spatial location information of an object.

In an implementation, the first communication device further includes: a third receiving unit 2203, configured to receive a sensing request from the second communication device, where the sensing request is used for initiating a sensing session between the first communication device and the second communication device.

In an implementation, the sending unit 2101 is further configured to send sensing capability information of the first communication device to the second communication device, where the sensing capability information indicates whether the first communication device is allowed to provide the first information.

The first communication device 2100 and 2200 in the embodiments of the disclosure can implement corresponding functions of the first communication device in the aforementioned embodiments of the disclosure of the method 800, 900, and 1000. For a process, a function, an implementation, and beneficial effects corresponding to each module (a sub-module, a unit, or a component, etc.) in the first communication device 2100 and 2200, reference may be made to the corresponding description in the aforementioned method embodiments of the disclosure, which will not be repeated herein. It should be noted that, functions described by each module (sub-module, unit, or component, etc.) in the first communications device 2100 and 2200 in the embodiments of the disclosure may be implemented by different modules (sub-modules, units, or components, etc.), or may be implemented by a same module (sub-module, unit, or component, etc.).

FIG. 23 is a schematic block diagram of a first communication device 2300 according to another embodiment of the disclosure, where the first communication device 2300 may include: a processing unit 2301, configured to activate a first sensing service by the first communication device when a trigger condition for the first sensing service is met.

In an implementation, the processing unit 2301 is configured to measure a sensing signal of the first sensing service to obtain sensing information of the first sensing service.

In an implementation, as illustrated in FIG. 24, a first communication device 2400 further includes: a first receiving unit 2401, configured to receive a trigger condition for a first sensing service from a second communication device.

In an implementation, the trigger condition for the first sensing service includes an event related to sensing information of a second sensing service.

In an implementation, the event related to the sensing information of the second sensing service includes at least one of: sensing information obtained by the second sensing service reaches a sensing information threshold; a variation of the sensing information obtained by the second sensing service reaches a sensing information variation threshold; or a trigger timer and/or a trigger counter corresponding to the second sensing service meets a trigger value.

In an implementation, the trigger condition for the first sensing service includes a condition related to a location of a sensing object.

In an implementation, the condition related to the location of the sensing object includes at least one of: a relative distance between the sensing object and the first communication device is less than a distance threshold; or the sensing object is located in a configured geographical area.

In an implementation, the first communication device further includes at least one of: a first sending unit 2402, configured to send first signaling to the sensing object periodically, where the first signaling is used for requesting for location information of the sensing object;
a second receiving unit 2403, configured to receive the location information of the sensing object sent by the sensing object periodically; or a third receiving unit 2404, configured to receive the location information of the sensing object sent by the sensing object based on an event triggered by the location-based condition, where the location-based condition is configured by a network device for the sensing object.

In an implementation, the first communication device further includes: a second sending unit 2405, configured to send an activation signaling to the second communication device and/or a third communication device, where the activation signaling is used for indicating to the second communication device and/or the third communication device to activate transmission of a sensing signal of the first sensing service.

In an implementation, the activation signaling is at least one of RRC signaling, MAC signaling, or PHY signaling.

In an implementation, the third communication device is the network device or a sensing transmitter.

In an implementation, the first communication device further includes: a forth receiving unit 2406, configured to receive configuration information associated with the first sensing service from the second communication device, where the configuration information includes at least one of: sensing signal configuration information, sensing measurement configuration information, or sensing information reporting configuration information.

In an implementation, the first communication device further includes: a third sending unit 2407, configured to send the sensing information of the first sensing service to the second communication device according to the configuration information.

In an implementation, the first communication device further includes: a fifth receiving unit 2408, configured to receive a sensing request from the second communication device, where the sensing request is used for initiating a sensing session between the first communication device and the second communication device.

In an implementation, the first communication device further includes: a forth sending unit 2409, configured to send sensing capability information of the first communication device to the second communication device, where the sensing capability information indicates whether the first communication device is allowed to activate the first sensing service autonomously based on the trigger condition.

The first communication device 2300 and 2400 in the embodiments of the disclosure can implement corresponding functions of the first communication device in the aforementioned embodiments of the disclosure of the method 1100, 1200, and 1300. For a process, a function, an implementation, and beneficial effects corresponding to each module (sub-module, unit, or component, etc.) in the first communication device 2300 and 2400, reference may be made to the corresponding description in the aforementioned method embodiments of the disclosure, which will not be repeated herein. It should be noted that, functions described by each module (sub-module, unit, or component, etc.) in the first communication device 2300 and 2400 in the embodiments of the disclosure may be implemented by different modules (sub-modules, units, or components, etc.), or may be implemented by a same module (sub-module, unit, or component, etc.).

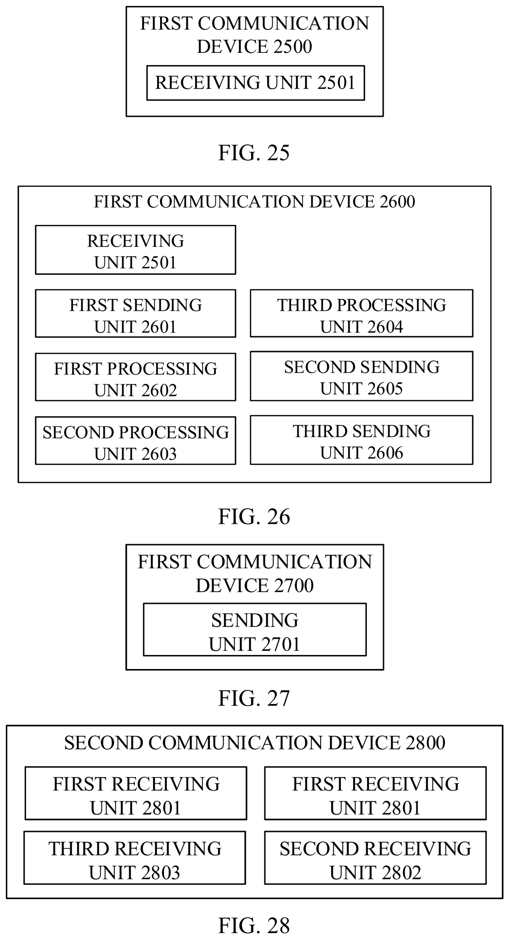

FIG. 25 is a schematic block diagram of a second communication device 2500 according to an embodiment of the disclosure, where the second communication device 2500 may include: a receiving unit 2501, configured to receive first information from a first communication device, where the first information is used for requesting the second communication device to provide information of a first sensing service and/or to update information of a second sensing service, where the first sensing service is a subsequent sensing service of the second sensing service of the first communication device.

In an implementation, as illustrated in FIG. 26, a second communication device 2600 further includes: a first sending unit 2601, configured to send second information to a first communication device, where the second information is used for providing information of a first sensing service and/or updated information of a second sensing service.

In an implementation, the second communication device further includes: a first processing unit 2602 to configure the second information according to sensing information and/or first information sent by the first communication device.

In an implementation, the first information is used for requesting the second communication device to indicate to activate the first sensing service and/or provide configuration of the first sensing service; the second communication device further includes: a second processing unit 2603, configured to indicate to activate the first sensing service and/or provide the configuration of the first sensing service according to the first information.

In an implementation, the first information is used for requesting the second communication device to update configuration of a sensing signal of the second sensing service; the second communication device further includes: a third processing unit 2604, configured to update the configuration of the sensing signal of the second sensing service according to the first information.

In an implementation, the first communication device is a UE, the second communication device is a network device, the first information is carried by RRC signaling and/or a MAC CE, where the first information is used for requesting the network device to update a time-frequency resource of a sensing signal sent over a Uu interface or a PC5 interface; the third processing unit 2604 is configured to update the time-frequency resource of the sensing signal sent over the Uu interface or the PC5 interface according to the first information.

In an implementation, the first communication device is a first UE, the second communication device is a second UE, the first information is carried by one of RRC signaling, the MAC CE, or SCI, where the first information is used for requesting the second UE to update the sensing signal sent over the PC5 interface; the third processing unit 2604 is configured to update the sensing signal sent over the PC5 interface according to the first information.

In an implementation, the first UE is a sensing receiver, and the second UE is an SS or a sensing transmitter.

In an implementation, the first communication device is the UE, the second communication device is a first network device, the first information is carried by RRC signaling and/or the MAC CE, where the first information is used for requesting the first network device to trigger a second network device to send a sensing signal of the first sensing service; the third processing unit 2604 is configured to trigger the second network device to send the sensing signal of the first sensing service according to the first information.

In an implementation, the second communication device further includes: a second sending unit 2605, configured to send configuration information associated with the second sensing service, where the configuration information includes at least one of: sensing signal configuration information, sensing measurement configuration information, or sensing information reporting configuration information.

In an implementation, the configuration information further includes indication information, where the indication information indicates whether the first communication device is allowed to provide the first information.

In an implementation, the receiving unit 2501 is further configured to receive sensing information of the second sensing service sent by the first communication device according to the configuration information, where the sensing information of the second sensing service is obtained from measuring the sensing signal of the second sensing service by the first communication device according to the configuration information.

In an implementation, the sensing information of the second sensing service carries the first information.

In an implementation, the receiving unit 2501 is further configured to receive the first information sent by the first communication device according to the configuration information.

In an implementation, the first information includes at least one of: indication information for requesting the second communication device to configure multi-node cooperative sensing; indication information for requesting the second communication device to send a sensing signal with a first time-frequency resource, where the first time-frequency resource is greater than a set value; indication information for requesting the second communication device to configure per-object sensing; or spatial location information of an object.

In an implementation, the second communication device further includes: a third sending unit 2606, configured to send a sensing request to the first communication device, where the sensing request is used for initiating a sensing session between the first communication device and the second communication device.

In an implementation, the receiving unit 2501 is further configured to receive sensing capability information of the first communication device, where the sensing capability information indicates whether the first communication device is allowed to provide the first information.

The second communication device 2500 and 2600 in the embodiments of the disclosure can implement corresponding functions of the second communication device in the aforementioned embodiments of the disclosure of the method 1400 and 1500. For a process, a function, an implementation, and beneficial effects corresponding to each module (sub-module, unit, or component, etc.) in the second communication device 2500 and 2600, reference may be made to the corresponding description in the aforementioned method embodiments of the disclosure, which will not be repeated herein. It should be noted that, functions described by each module (sub-module, unit, or component, etc.) in the second communication device 2500 and 2600 in the embodiments of the disclosure may be implemented by different modules (sub-modules, units, or components, etc.), or may be implemented by a same module (sub-module, unit, or component, etc.).

FIG. 27 is a schematic block diagram of a second communication device 2700 according to another embodiment of the disclosure, where the second communication device 2700 includes: a sending unit 2701, configured to send a trigger condition for a first sensing service to a first communication device, where the trigger condition is used for indicating to the first communication device to activate the first sensing service when the trigger condition for the first sensing service is met.

In an implementation, activating the first sensing service includes: measuring a sensing signal of the first sensing service to obtain sensing information of the first sensing service.

In an implementation, the trigger condition for the first sensing service includes an event related to sensing information of the second sensing service.

In an implementation, the event related to the sensing information of the second sensing service includes at least one of: sensing information obtained by the second sensing service reaches a sensing information threshold; a variation of the sensing information obtained by the second sensing service reaches a sensing information variation threshold; or a trigger timer and/or a trigger counter corresponding to the second sensing service meets a trigger value.

In an implementation, the trigger condition for the first sensing service includes a condition related to a location of a sensing object.

In an implementation, the condition related to the location of the sensing object includes at least one of: a relative distance between the sensing object and the first communication device is less than a distance threshold; or the sensing object is located in a configured geographic area.

In an implementation, as illustrated in FIG. 28, a second communication device 2800 further includes: a first receiving unit 2801, configured to receive an activation signaling from a first communication device, where the activation signaling is used for indicating to the second communication device to activate transmission of a sensing signal of a first sensing service.

In an implementation, the activation signaling is at least one of RRC signaling, MAC signaling, or PHY signaling.

In an implementation, the sending unit 2801 is further configured to send configuration information associated with the first sensing service to the first communication device, where the configuration information includes at least one of: sensing signal configuration information, sensing measurement configuration information, or sensing information reporting configuration information.

In an implementation, the second communication device further includes: a second receiving unit 2802, configured to receive sensing information of the first sensing service sent by the first communication device according to the configuration information.

In an implementation, the sending unit 2801 is further configured to send a sensing request to the first communication device, where the sensing request is used for initiating a sensing session between the first communication device and the second communication device.

In an implementation, a third receiving unit 2803 is configured to receive sensing capability information of the first communication device, where the sensing capability information indicates whether the first communication device is allowed to activate the first sensing service autonomously based on a trigger condition.

The second communication device 2700 and 2800 in the embodiments of the disclosure can implement corresponding functions of the second communication device in the aforementioned embodiments of the disclosure of the method 1600 and 1700. For a process, a function, an implementation, and beneficial effects corresponding to each module (sub-module, unit, or component, etc.) in the second communication device 2700 and 2800, reference may be made to the corresponding description in the aforementioned method embodiments of the disclosure, which will not be repeated herein. It should be noted that, functions described by each module (sub-module, unit, or component, etc.) in the second communication device 2700 and 2800 in the embodiments of the disclosure may be implemented by different modules (sub-modules, units, or components, etc.), or may be implemented by a same module (sub-module, unit, or component, etc.).

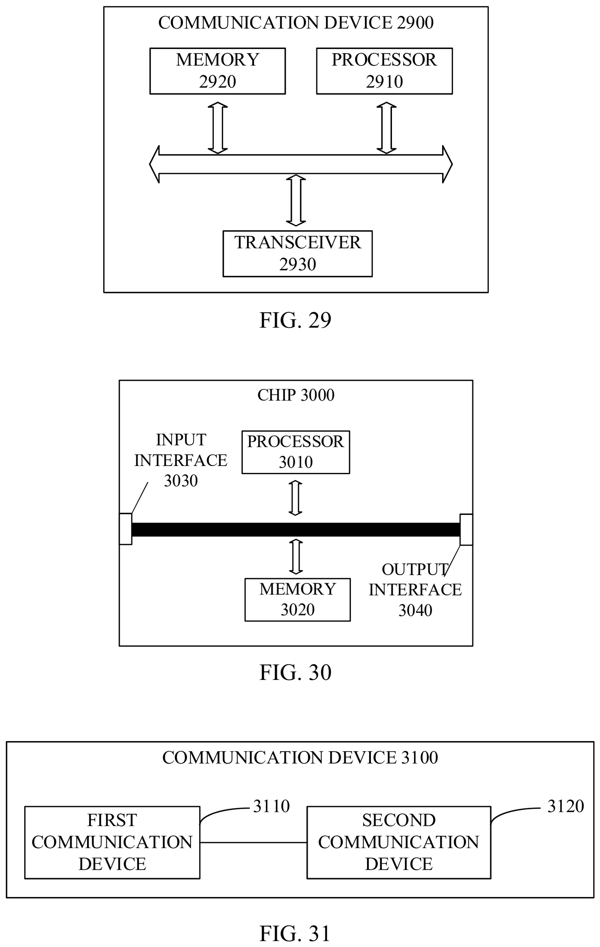

FIG. 29 is a schematic block diagram of a communication device 2900 according to embodiments of the disclosure, where the communication device 2900 includes a processor 2910, which can invoke and execute a computer program stored in a memory, to cause the communication device 2900 to perform the methods in embodiments of the disclosure.

In an implementation, the communication device 2900 may further include a memory 2920, and the processor 2910 may invoke and execute a computer program stored in the memory 2920, to cause the communication device 2900 to perform the methods in embodiments of the disclosure.

The memory 2920 may be a separate component independent of the processor 2910, or may be integrated in the processor 2910.

In an implementation, the communication device 2900 may further include a transceiver 2930; the processor 2910 can control the transceiver 2930 to communicate with other devices, specifically, to transmit information or data to other devices or to receive information or data transmitted by other devices.

The transceiver 2930 may include a transmitter and a receiver. The transceiver 2930 may further include an antenna, where one or more antennas can be provided.

In an implementation, the communication device 2900 may be operable as a second communication device in embodiments of the disclosure, and the communication device 2900 can implement the corresponding operations implemented by the second communication device in various methods in embodiments of the disclosure, which will not be repeated herein for the sake of simplicity.

In an implementation, the communication device 2900 may be operable as a first communication device in embodiments of the disclosure, and the communication device 2900 can implement the corresponding operations implemented by the first communication device in various methods in embodiments of the disclosure, which will not be repeated herein for the sake of simplicity.

FIG. 30 is a schematic block diagram of a chip 3000 according to embodiments of the disclosure, where the chip 3000 includes a processor 3010, where the processor 3010 may invoke and execute a computer program from a memory, to perform the methods in embodiments of the disclosure.

In an implementation, the chip 3000 may further include a memory 3020, and the processor may invoke and execute a computer program from the memory 3020, to implement the methods implemented by a first communication device or a second communication device in embodiments of the disclosure.

The memory 3020 may be a separate component independent of the processor 3010, or may be integrated in the processor 3010.

In an implementation, the chip 3000 may further include an input interface 3030. The processor 3010 can control the input interface 3030 to communicate with other devices or chips, and specifically, to obtain information or data sent by other devices or chips.

In an implementation, the chip 3000 may further include an output interface 3040. The processor 3010 can control the output interface 3040 to communicate with other devices or chips, and specifically, to output information or data to other devices or chips.

In an implementation, the chip may be applied to the second communication device in embodiments of the disclosure, and the chip can implement the corresponding operations implemented by the second communication device in various methods in embodiments of the disclosure, which will not be repeated herein for the sake of simplicity.

In an implementation, the chip may be applied to the first communication device in embodiments of the disclosure, and the chip can implement the corresponding operations implemented by the first communication device in various methods in embodiments of the disclosure, which will not be repeated herein for the sake of simplicity.

The chip applied to the second communication device and the chip applied to the first communication device may be a same chip, or the chip applied to the second communication device and the chip applied to the first communication device may be the different chips.

It should be understood that, the chip in embodiments of the disclosure may also be a system-on-chip (SOC).

The aforementioned processor may be a general-purpose processor, a digital signal processor (DSP), a field programmable gate array (FPGA), an application specific integrated circuit (ASIC), or other programmable logic devices, transistor logic devices, or discrete hardware components. The general-purpose processor may be a microprocessor, or the processor may be any conventional processor or the like.

It should be understood that, the aforementioned memory may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or flash memory. The volatile memory may be a random access memory (RAM).

It should be understood that, the aforementioned memory is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. In other words, the memory in embodiments of the disclosure is intended to include, but is not limited to, these and any other suitable types of memory.

FIG. 31 is a schematic block diagram of a communication system 3100 according to embodiments of the disclosure, where the communication device 3100 include a first communication 3110 and a second communication device 3120.

In an implementation, the first communication device 3110 is configured to send first information to a second communication device, where the first information is used for requesting the second communication device to provide information of a first sensing service and/or to update information of a second sensing service, where the first sensing service is a subsequent sensing service of the second sensing service of a first communication device; the second communication device 3120, is configured to receive the first information from the first communication device, where the first information is used for requesting the second communication device to provide information of the first sensing service and/or to update information of the second sensing service.

In an implementation, the first communication device 3110 is configured to activate the first sensing service by the first communication device when a trigger condition for the first sensing service is met; the second communication device 3120, is configured to send the trigger condition for the first sensing service to the first communication device, where the trigger condition is used for indicating to the first communication device to activate the first sensing service when the trigger condition for the first sensing service is met.

The first communication device 3110 may be applied to implement the corresponding functions implemented by the first communication device in the aforementioned methods, and the second communication device 3120 may be applied to implement the corresponding functions implemented by the second communication device in the aforementioned methods, which will not be repeated herein for the sake of simplicity.

All or some of the aforementioned embodiments can be implemented through a software, a hardware, a firmware, or any other combination thereof. When implemented by software, all or some the above embodiments can be implemented in the form of a computer program product. The computer program product includes one or more computer instructions. When the computer instructions are applied and executed on a computer, all or some operations or functions of the embodiments of the disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It should be understood that, in various embodiments of the disclosure, a magnitude of a sequence number of each of the foregoing processes does not mean an execution order, and an execution order of each process should be determined according to a function and an internal logic of the process, which shall not constitute any limitation to an implementation process of embodiments of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be repeated herein.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A sensing method, comprising:
sending, by a first communication device, first information to a second communication device, wherein the first information is used for requesting the second communication device to provide information of a first sensing service and/or to update information of a second sensing service, wherein the first sensing service is a subsequent sensing service of the second sensing service of the first communication device.

2. The method of claim 1, further comprising:
receiving, by the first communication device, second information from the second communication device, wherein the second information is used for providing information of the first sensing service and/or updated information of the second sensing service.

3. The method of claim 2, wherein the second information is configured by the second communication device according to sensing information and/or the first information sent by the first communication device.

4. The method of any of claims 1 to 3, wherein the first information is used for requesting the second communication device to indicate to activate the first sensing service and/or provide configuration of the first sensing service.

5. The method of any of claims 1 to 4, wherein the first information is used for requesting the second communication device to update configuration of a sensing signal of the second sensing service.

6. The method of claim 5, wherein the first communication device is a user equipment (UE), the second communication device is a network device, the first information is carried by radio resource control (RRC) signaling and/or a media access control control-element (MAC CE), wherein the first information is used for requesting the network device to update a time-frequency resource of a sensing signal sent over a Uu interface or a PC5 interface.

7. The method of claim 5, wherein the first communication device is a first UE, the second communication device is a second UE, the first information is carried by one of RRC signaling, a MAC CE, or sidelink control information (SCI), wherein the first information is used for requesting the second UE to update a sensing signal sent over a PC5 interface.

8. The method of claim 7, wherein the first UE is a sensing receiver, and the second UE is a sensing server (SS) or a sensing transmitter.

9. The method of claim 5, wherein the first communication device is a UE, the second communication device is a first network device, the first information is carried by RRC signaling and/or a MAC CE, wherein the first information is used for requesting the first network device to trigger a second network device to send a sensing signal of the first sensing service.

10. The method of any of claims 1 to 9, further comprising:
receiving, by the first communication device, configuration information associated with the second sensing service, wherein the configuration information comprises at least one of: sensing signal configuration information, sensing measurement configuration information, or sensing information reporting configuration information.

11. The method of claim 10, wherein the configuration information further comprises indication information, wherein the indication information indicates whether the first communication device is allowed to provide the first information.

12. The method of claim 10 or 11, further comprising:
measuring, by the first communication device, the sensing signal of the second sensing service according to the configuration information, to obtain sensing information of the second sensing service.

13. The method of claim 12, further comprising:
sending, by the first communication device, the sensing information of the second sensing service to the second communication device according to the configuration information.

14. The method of claim 13, wherein the sensing information of the second sensing service carries first information.

15. The method of claim 10 or 11, wherein sending, by the first communication device, the first information to the second communication device comprises:
sending, by the first communication device, the first information to the second communication device according to the configuration information.

16. The method of any of claims 1 to 15, wherein the first information comprises at least one of:
indication information for requesting the second communication device to configure multi-node cooperative sensing;
indication information for requesting the second communication device to send a sensing signal with a first time-frequency resource, wherein the first time-frequency resource is greater than a set value;
indication information for requesting the second communication device to configure per-object sensing; or
spatial location information of an object.

17. The method of any of claims 1 to 16, further comprising:
receiving, by the first communication device, a sensing request from the second communication device, wherein the sensing request is used for initiating a sensing session between the first communication device and the second communication device.

18. The method of any of claims 1 to 17, further comprising:
sending, by the first communication device, sensing capability information of the first communication device to the second communication device, wherein the sensing capability information indicates whether the first communication device is allowed to provide the first information.

19. A sensing method, comprising:
activating, by a first communication device, a first sensing service when a trigger condition for the first sensing service is met.

20. The method of claim 19, wherein activating the first sensing service comprises:
measuring a sensing signal of the first sensing service to obtain sensing information of the first sensing service.

21. The method of claim 19 or 20, further comprising:
receiving, by the first communication device, the trigger condition for the first sensing service from a second communication device.

22. The method of claim 21, wherein the trigger condition for the first sensing service comprises an event related to sensing information of a second sensing service.

23. The method of claim 22, wherein the event related to the sensing information of the second sensing service comprises at least one of:
a sensing information obtained by the second sensing service reaches a sensing information threshold;
a variation of the sensing information obtained by the second sensing service reaches a sensing information variation threshold; or
a trigger timer and/or a trigger counter corresponding to the second sensing service meets a trigger value.

24. The method of any of claims 21 to 23, wherein the trigger condition for the first sensing service comprises a condition related to a location of a sensing object.

25. The method of claim 24, wherein the condition related to the location of the sensing object comprises at least one of:
a relative distance between the sensing object and the first communication device is less than a distance threshold; or
the sensing object is located in a configured geographical area.

26. The method of claim 24 or 25, further comprising at least one of:
sending, by the first communication device, first signaling to the sensing object periodically, wherein the first signaling is used for requesting for location information of the sensing object;
receiving, by the first communication device, the location information of the sensing object sent by the sensing object periodically; or
receiving, by the first communication device, the location information of the sensing object sent by the sensing object based on an event triggered by a location-based condition, wherein the location-based condition is configured by a network device for the sensing object.

27. The method of any of claims 19 to 26, further comprising:
sending, by the first communication device, an activation signaling to the second communication device and/or a third communication device, wherein the activation signaling is used for indicating to the second communication device and/or the third communication device to activate transmission of the sensing signal of the first sensing service.

28. The method of claim 27, wherein the activation signaling is at least one of radio resource control (RRC) signaling, media access control (MAC) signaling, or physical layer (PHY) signaling.

29. The method of claim 27 or 28, wherein the third communication device is the network device or a sensing transmitter.

30. The method of any of claims 19 to 29, further comprising:
receiving, by the first communication device, configuration information associated with the first sensing service from the second communication device, wherein the configuration information comprises at least one of: sensing signal configuration information, sensing measurement configuration information, or sensing information reporting configuration information.

31. The method of claim 30, further comprising:
sending, by the first communication device, the sensing information of the first sensing service to the second communication device according to the configuration information.

32. The method of any of claims 19 to 31, further comprising:
receiving, by the first communication device, a sensing request from the second communication device, wherein the sensing request is used for initiating a sensing session between the first communication device and the second communication device.

33. The method of any of claims 19 to 32, further comprising:
sending, by the first communication device, sensing capability information of the first communication device to the second communication device, wherein the sensing capability information indicates whether the first communication device is allowed to activate the first sensing service autonomously based on the trigger condition.

34. A sensing method, comprising:
receiving, by a second communication device, first information from a first communication device, wherein the first information is used for requesting the second communication device to provide information of a first sensing service and/or to update information of a second sensing service, wherein the first sensing service is a subsequent sensing service of the second sensing service of the first communication device.

35. The method of claim 34, further comprising:
sending, by the second communication device, second information to the first communication device, wherein the second information is used for providing information of the first sensing service and/or updated information of the second sensing service.

36. The method of claim 35, further comprising:
configuring, by the second communication device, the second information according to sensing information and/or the first information sent by the first communication device.

37. The method of any of claims 34 to 36, wherein the first information is used for requesting the second communication device to indicate to activate the first sensing service and/or provide configuration of the first sensing service; the method further comprises:
indicating, by the second communication device, to activate the first sensing service and/or providing, by the second communication device, configuration of the first sensing service, according to the first information.

38. The method of any of claims 34 to 37, wherein the first information is used for requesting the second communication device to update configuration of a sensing signal of the second sensing service; the method further comprises:
updating, by the second communication device, configuration of the sensing signal of the second sensing service according to the first information.

39. The method of claim 38, wherein the first communication device is a user equipment (UE), the second communication device is a network device, the first information is carried by radio resource control (RRC) signaling and/or a media access control control-element (MAC CE), wherein the first information is used for requesting the network device to update a time-frequency resource of a sensing signal sent over a Uu interface or a PC5 interface; the method further comprises:
updating, by the network device, the time-frequency resource of the sensing signal sent over the Uu interface or the PC5 interface according to the first information.

40. The method of claim 38, wherein the first communication device is a first UE, the second communication device is a second UE, the first information is carried by one of RRC signaling, a MAC CE, or SCI, wherein the first information is used for requesting the second UE to update a sensing signal sent over a PC5 interface; the method further comprises:
updating, by the second UE, the sensing signal sent over the PC5 interface according to the first information.

41. The method of claim 40, wherein the first UE is a sensing receiver, and the second UE is a sensing server or a sensing transmitter.

42. The method of claim 38, wherein the first communication device is a UE, the second communication device is a first network device, the first information is carried by RRC signaling and/or a MAC CE, wherein the first information is used for requesting the first network device to trigger a second network device to send a sensing signal of the first sensing service; the method further comprises:
triggering, by the first network device according to the first information, the second network device to send the sensing signal of the first sensing service.

43. The method of any of claims 34 to 42, further comprising:
sending, by the second communication device, configuration information associated with the second sensing service, wherein the configuration information comprises at least one of: sensing signal configuration information, sensing measurement configuration information, or sensing information reporting configuration information.

44. The method of claim 43, wherein the configuration information further comprises indication information, wherein the indication information indicates whether the first communication device is allowed to provide the first information.

45. The method of claim 43 or 44, further comprising:
receiving, by the second communication device, sensing information of the second sensing service sent by the first communication device according to the configuration information, wherein the sensing information of the second sensing service is obtained by measuring the sensing signal of the second sensing service by the first communication device according to the configuration information.

46. The method of claim 45, wherein the sensing information of the second sensing service carries first information.

47. The method of claim 43 or 44, wherein receiving, by the second communication device, the first information sent by the first communication device comprises:
receiving, by the second communication device, the first information sent by the first communication device according to the configuration information.

48. The method of any of claims 34 to 47, wherein the first information comprises at least one of:
indication information for requesting the second communication device to configure multi-node cooperative sensing;
indication information for requesting the second communication device to send a sensing signal with a first time-frequency resource, wherein the first time-frequency resource is greater than a set value;
indication information for requesting the second communication device to configure per-object sensing; or
spatial location information of an object.

49. The method of any of claims 34 to 48, further comprising:
sending, by the second communication device, a sensing request to the first communication device, wherein the sensing request is used for initiating a sensing session between the first communication device and the second communication device.

50. The method of any of claims 34 to 49, further comprising:
receiving, by the second communication device, sensing capability information of the first communication device, wherein the sensing capability information indicates whether the first communication device is allowed to provide the first information.

51. A sensing method, comprising:
sending, by a second communication device, a trigger condition for a first sensing service to a first communication device, wherein the trigger condition is used for indicating to the first communication device to activate the first sensing service when the trigger condition for the first sensing service is met.

52. The method of claim 51, wherein activating the first sensing service comprises:
measuring a sensing signal of the first sensing service to obtain sensing information of the first sensing service.

53. The method of claim 51, wherein the trigger condition for the first sensing service comprises an event related to sensing information of a second sensing service.

54. The method of claim 53, wherein the event related to the sensing information of the second sensing service comprises at least one of:
a sensing information obtained by the second sensing service reaches a sensing information threshold;
a variation of the sensing information obtained by the second sensing service reaches a sensing information variation threshold; or
a trigger timer and/or a trigger counter corresponding to the second sensing service meets a trigger value.

55. The method of any of claims 51 to 54, wherein the trigger condition for the first sensing service comprises a condition related to a location of a sensing object.

56. The method of claim 55, wherein the condition related to the location of the sensing object comprises at least one of:
a relative distance between the sensing object and the first communication device is less than a distance threshold; or
the sensing object is located in a configured geographic area.

57. The method of any of claims 51 to 56, further comprising:
receiving, by the second communication device, an activation signaling from the first communication device, wherein the activation signaling is used for indicating to the second communication device to activate transmission of the sensing signal of the first sensing service.

58. The method of claim 57, wherein the activation signaling is at least one of radio resource control (RRC) signaling, media access control (MAC) signaling, or physical layer (PHY) signaling.

59. The method of any of claims 51 to 58, further comprising:
sending, by the second communication device, configuration information associated with the first sensing service to the first communication device, wherein the configuration information comprises at least one of: sensing signal configuration information, sensing measurement configuration information, or sensing information reporting configuration information.

60. The method of claim 59, further comprising:
receiving, by the second communication device, the sensing information of the first sensing service sent by the first communication device according to the configuration information.

61. The method of any of claims 51 to 60, further comprising:
sending, by the second communication device, a sensing request to the first communication device, wherein the sensing request is used for initiating a sensing session between the first communication device and the second communication device.

62. The method of any of claims 51 to 61, further comprising:
receiving, by the second communication device, sensing capability information of the first communication device, wherein the sensing capability information indicates whether the first communication device is allowed to activate the first sensing service autonomously based on the trigger condition.

63. A first communication device, comprising:
a sending unit, configured to send first information to a second communication device, wherein the first information is used for requesting the second communication device to provide information of a first sensing service and/or to update information of a second sensing service, wherein the first sensing service is a subsequent sensing service of the second sensing service of the first communication device.

64. The first communication device of claim 63, further comprising:
a first receiving unit, configured to receive second information from the second communication device, wherein the second information is used for providing information of the first sensing service and/or updated information of the second sensing service.

65. The first communication device of claim 64, wherein the second information is configured by the second communication device according to sensing information and/or the first information sent by the first communication device.

66. The first communication device of any of claims 63 to 65, wherein the first information is used for requesting the second communication device to indicate to activate the first sensing service and/or provide configuration of the first sensing service.

67. The first communication device of any of claims 63 to 66, wherein the first information is used for requesting the second communication device to update configuration of a sensing signal of the second sensing service.

68. The first communication device of claim 67, wherein the first communication device is a UE, the second communication device is a network device, the first information is carried by radio resource control (RRC) signaling and/or a media access control control-element (MAC CE), wherein the first information is used for requesting the network device to update a time-frequency resource of a sensing signal sent over a Uu interface or a PC5 interface.

69. The first communication device of claim 67, wherein the first communication device is a first UE, the second communication device is a second UE, the first information is carried by one of RRC signaling, a MAC CE, or SCI, wherein the first information is used for requesting the second UE to update a sensing signal sent over a PC5 interface.

70. The first communication device of claim 69, wherein the first UE is a sensing receiver, and the second UE is a sensing server (SS) or a sensing transmitter.

71. The first communication device of claim 67, wherein the first communication device is a UE, the second communication device is a first network device, the first information is carried by RRC signaling and/or a MAC CE, wherein the first information is used for requesting the first network device to trigger a second network device to send a sensing signal of the first sensing service.

72. The first communication device of any of claims 63 to 71, further comprising:
a second receiving unit, configured to receive configuration information associated with the second sensing service, wherein the configuration information comprises at least one of: sensing signal configuration information, sensing measurement configuration information, or sensing information reporting configuration information.

73. The first communication device of claim 72, wherein the configuration information further comprises indication information, wherein the indication information indicates whether the first communication device is allowed to provide the first information.

74. The first communication device of claim 72 or 73, further comprising:
a processing unit, configured to measure the sensing signal of the second sensing service according to the configuration information, to obtain sensing information of the second sensing service.

75. The first communication device of claim 74, wherein the sending unit is further configured to send the sensing information of the second sensing service to the second communication device according to the configuration information.

76. The first communication device of claim 75, wherein the sensing information of the second sensing service carries first information.

77. The first communication device of claim 72 or 73, wherein the sending unit is further configured to send the first information to the second communication device according to the configuration information.

78. The first communication device of any of claims 63 to 77, wherein the first information comprises at least one of:
indication information for requesting the second communication device to configure multi-node cooperative sensing;
indication information for requesting the second communication device to send a sensing signal with a first time-frequency resource, wherein the first time-frequency resource is greater than a set value;
indication information for requesting the second communication device to configure per-object sensing; or
spatial location information of an object.

79. The first communication device of any of claims 63 to 78, further comprising:
a third receiving unit, configured to receive a sensing request from the second communication device, wherein the sensing request is used for initiating a sensing session between the first communication device and the second communication device.

80. The first communication device of any of claims 63 to 79, wherein the sending unit is further configured to send sensing capability information of the first communication device to the second communication device, wherein the sensing capability information indicates whether the first communication device is allowed to provide the first information.

81. A first communication device, comprising:
a processing unit, configured to activate a first sensing service by a first communication device when a trigger condition for the first sensing service is met.

82. The first communication device of claim 81, wherein the processing unit is configured to measure a sensing signal of the first sensing service to obtain the sensing information of the first sensing service.

83. The first communication device of claim 81 or 82, further comprising:
a first receiving unit, configured to receive the trigger condition for the first sensing service from a second communication device.

84. The first communication device of claim 83, wherein the trigger condition for the first sensing service comprises an event related to sensing information of a second sensing service.

85. The first communication device of claim 84, wherein the event related to the sensing information of the second sensing service comprises at least one of:
a sensing information obtained by the second sensing service reaches a sensing information threshold;
a variation of the sensing information obtained by the second sensing service reaches a sensing information variation threshold; or
a trigger timer and/or a trigger counter corresponding to the second sensing service meets a trigger value.

86. The first communication device of any of claims 83 to 85, wherein the trigger condition for the first sensing service comprises a condition related to a location of a sensing object.

87. The first communication device of claim 86, wherein the condition related to the location of the sensing object comprises at least one of:
a relative distance between the sensing object and the first communication device is less than a distance threshold; or
the sensing object is located in a configured geographical area.

88. The first communication device of claim 86 or 87, further comprising at least one of:
a first sending unit, configured to send first signaling to the sensing object periodically, wherein the first signaling is used for requesting for location information of the sensing object;
a second receiving unit, configured to receive the location information of the sensing object sent by the sensing object periodically; or
a third receiving unit, configured to receive the location information of the sensing object sent by the sensing object based on an event triggered by a location-based condition, wherein the location-based condition is configured by a network device for the sensing object.

89. The first communication device of any of claims 81 to 88, further comprising:
a second sending unit, configured to send an activation signaling to the second communication device and/or a third communication device, wherein the activation signaling is used for indicating to the second communication device and/or the third communication device to activate transmission of the sensing signal of the first sensing service.

90. The first communication device of claim 89, wherein the activation signaling is at least one of radio resource control (RRC) signaling, media access control (MAC) signaling, or physical layer (PHY) signaling.

91. The first communication device of claim 89 or 90, wherein the third communication device is the network device or a sensing transmitter.

92. The first communication device of any of claims 81 to 91, further comprising:
a forth receiving unit, configured to receive configuration information associated with the first sensing service from the second communication device, wherein the configuration information comprises at least one of: sensing signal configuration information, sensing measurement configuration information, or sensing information reporting configuration information.

93. The first communication device of claim 92, further comprising:
a third sending unit, configured to send the sensing information of the first sensing service to the second communication device according to the configuration information.

94. The first communication device of any of claims 81 to 93, further comprising:
a fifth receiving unit, configured to receive a sensing request from the second communication device, wherein the sensing request is used for initiating a sensing session between the first communication device and the second communication device.

95. The first communication device of any of claims 81 to 94, further comprising:
a forth sending unit, configured to send sensing capability information of the first communication device to the second communication device, wherein the sensing capability information indicates whether the first communication device is allowed to activate the first sensing service autonomously based on the trigger condition.

96. A second communication device, comprising:
a receiving unit, configured to receive first information from a first communication device, wherein the first information is used for requesting the second communication device to provide information of a first sensing service and/or to update information of a second sensing service, wherein the first sensing service is a subsequent sensing service of the second sensing service of the first communication device.

97. The second communication device of claim 96, further comprising:
a first sending unit, configured to send second information to the first communication device, wherein the second information is used for providing information of the first sensing service and/or updated information of the second sensing service.

98. The second communication device of claim 97, further comprising:
a first processing unit, configured to configure the second information according to sensing information and/or the first information sent by the first communication device.

99. The second communication device of any of claims 96 to 98, wherein the first information is used for requesting the second communication device to indicate to activate the first sensing service and/or provide configuration of the first sensing service; the second communication device further comprises:
a second processing unit, configured to indicate to activate the first sensing service and/or provide configuration of the first sensing service according to the first information.

100. The second communication device of any of claims 96 to 99, wherein the first information is used for requesting the second communication device to update configuration of a sensing signal of the second sensing service; the second communication device further comprises:
a third processing unit, configured to update configuration of the sensing signal of the second sensing service according to the first information.

101. The second communication device of claim 100, wherein the first communication device is a user equipment (UE), the second communication device is a network device, the first information is carried by radio resource control (RRC) signaling and/or a media access control control-element (MAC CE), wherein the first information is used for requesting the network device to update a time-frequency resource of a sensing signal sent over a Uu interface or a PC5 interface;
the third processing unit is configured to update the time-frequency resource of the sensing signal sent over the Uu interface or the PC5 interface according to the first information.

102. The second communication device of claim 100, wherein the first communication device is a first UE, the second communication device is a second UE, the first information is carried by one of RRC signaling, a MAC CE, or SCI, wherein the first information is used for requesting the second UE to update a sensing signal sent over a PC5 interface;
the third processing unit is configured to update the sensing signal sent over the PC5 interface according to the first information.

103. The second communication device of claim 102, wherein the first UE is a sensing receiver, and the second UE is a sensing server or a sensing transmitter.

104. The second communication device of claim 100, wherein the first communication device is a UE, the second communication device is a first network device, the first information is carried by RRC signaling and/or a MAC CE, wherein the first information is used for requesting the first network device to trigger a second network device to send a sensing signal of the first sensing service;
the third processing unit is configured to trigger the second network device to send the sensing signal of the first sensing service according to the first information.

105. The second communication device of any of claims 96 to 104, further comprising:
a second sending unit, configured to send configuration information associated with the second sensing service, wherein the configuration information comprises at least one of: sensing signal configuration information, sensing measurement configuration information, or sensing information reporting configuration information.

106. The second communication device of claim 105, wherein the configuration information further comprises indication information, wherein the indication information indicates whether the first communication device is allowed to provide the first information.

107. The second communication device of claim 105 or 106, wherein the receiving unit is further configured to receive sensing information of the second sensing service sent by the first communication device according to the configuration information, wherein the sensing information of the second sensing service is obtained by measuring the sensing signal of the second sensing service by the first communication device according to the configuration information.

108. The second communication device of claim 107, wherein the sensing information of the second sensing service carries first information.

109. The second communication device of claim 105 or 106, wherein the receiving unit is further configured to receive the first information sent by the first communication device according to the configuration information.

110. The second communication device of any of claims 96 to 109, wherein the first information comprises at least one of:
indication information for requesting the second communication device to configure multi-node cooperative sensing;
indication information for requesting the second communication device to send a sensing signal with a first time-frequency resource, wherein the first time-frequency resource is greater than a set value;
indication information for requesting the second communication device to configure per-object sensing; or
spatial location information of an object.

111. The second communication device of any of claims 96 to 110, further comprising:
a third sending unit, configured to send a sensing request to the first communication device, wherein the sensing request is used for initiating a sensing session between the first communication device and the second communication device.

112. The second communication device of any of claims 96 to 111, wherein the receiving unit is further configured to receive sensing capability information of the first communication device, wherein the sensing capability information indicates whether the first communication device is allowed to provide the first information.

113. A second communication device, comprising:
a sending unit, configured to send a trigger condition for a first sensing service to a first communication device, wherein the trigger condition is used for indicating to the first communication device to activate the first sensing service when the trigger condition for the first sensing service is met.

114. The second communication device of claim 113, wherein activating the first sensing service comprises:
measuring a sensing signal of the first sensing service to obtain sensing information of the first sensing service.

115. The second communication device of claim 113, wherein the trigger condition for the first sensing service comprises an event related to a sensing information of a second sensing service.

116. The second communication device of claim 115, wherein the event related to the sensing information of the second sensing service comprises at least one of:
a sensing information obtained by the second sensing service reaches a sensing information threshold;
a variation of the sensing information obtained by the second sensing service reaches a sensing information variation threshold; or
a trigger timer and/or a trigger counter corresponding to the second sensing service meets a trigger value.

117. The second communication device of any of claims 113 to 116, wherein the trigger condition for the first sensing service comprises a condition related to a location of a sensing object.

118. The second communication device of claim 117, wherein the condition related to the location of the sensing object comprises at least one of:
a relative distance between the sensing object and the first communication device is less than a distance threshold; or
the sensing object is located in a configured geographic area.

119. The second communication device of any of claims 113 to 118, further comprising:
a first receiving unit, configured to receive an activation signaling from the first communication device, wherein the activation signaling is used for indicating to the second communication device to activate transmission of the sensing signal of the first sensing service.

120. The second communication device of claim 119, wherein the activation signaling is at least one of radio resource control (RRC) signaling, media access control (MAC) signaling, or physical layer (PHY) signaling.

121. The second communication device of any of claims 113 to 120, wherein the sending unit is further configured to send configuration information associated with the first sensing service to the first communication device, wherein the configuration information comprises at least one of: sensing signal configuration information, sensing measurement configuration information, or sensing information reporting configuration information.

122. The second communication device of claim 121, further comprising:
a second receiving unit, configured to receive the sensing information of the first sensing service sent by the first communication device according to the configuration information.

123. The second communication device of any of claims 113 to 122, wherein the sending unit is further configured to send a sensing request to the first communication device, wherein the sensing request is used for initiating a sensing session between the first communication device and the second communication device.

124. The second communication device of any of claims 113 to 123, further comprising:
a third receiving unit, configured to receive sensing capability information of the first communication device, wherein the sensing capability information indicates whether the first communication device is allowed to activate the first sensing service autonomously based on the trigger condition.

125. A first communication device, comprising:
a processor and a memory, wherein the memory is configured to store a computer program, the processor is configured to invoke and execute the computer program stored in the memory, to cause the first communication device to perform the method of any of claims 1 to 18 or claims 19 to 33.

126. A second communication device, comprising:
a processor and a memory, wherein the memory is configured to store a computer program, the processor is configured to invoke and execute the computer program stored in the memory, to cause the second communication device to perform the method of any of claims 34 to 50 or claims 51 to 62.

127. A chip, comprising:
a processor configured to invoke and execute a computer program from a memory, to cause a device equipped with the chip to perform the method of any one of claims 1 to 33 or claims 34 to 62.

128. A computer-readable storage medium, configured to store computer programs which, when executed by a device, are operable with the device to perform the method of any one of claims 1 to 18 or claims 19 to 33.

129. A computer-readable storage medium, configured to store computer programs which, when executed by a device, are operable with the device to perform the method of any one of claims 34 to 50 or claims 51 to 62.

130. A computer program product, comprising computer program instructions, which are operable with a computer to perform the method of any of claims 1 to 18 or claims 19 to 33.

131. A computer program product, comprising computer program instructions, which are operable with a computer to perform the method of any one of claims 34 to 50 or claims 51 to 62.

132. A computer program, operable with a computer to perform the method of any one of claims 1 to 18 or claims 19 to 33.

133. A computer program, operable with a computer to perform the method of any one of claims 34 to 50 or claims 51 to 62.
